# EUROPEAN PATENT SPECIFICATION

(11) **EP 3 917 081 B1**
(45) Date of publication and mention of the grant of the patent: **25.09.2024**
(21) Application number: 19910991.9
(22) Date of filing: 28.10.2019
(51) Int. Cl.: H04L 41/0823, H04L 41/0654, H04L 41/083

(54) **METHOD FOR SWITCHING TIME SLOT CONFIGURATION IN FLEXIBLE ETHERNET PROTOCOL, AND RELATED DEVICE**
VERFAHREN ZUR ZEITSCHLITZKONFIGURATIONSÄNDERUNG IN EINEM FLEXIBLEN ETHERNET-PROTOKOLL UND ZUGEHÖRIGE VORRICHTUNG
PROCÉDÉ DE COMMUTATION DE CONFIGURATION DE CRÉNEAU TEMPOREL DANS UN PROTOCOLE ETHERNET FLEXIBLE, ET DISPOSITIF ASSOCIÉ

(30) Priority: 25.01.2019 CN 201910074077
(43) Date of publication of application: 01.12.2021
(73) Proprietor: ZTE Corporation, Shenzhen, Guangdong 518057 (CN)
(72) Inventor: LIU, Feng, Shenzhen, Guangdong 518057 (CN)
(74) Representative: Canzler & Bergmeier Patentanwälte Partnerschaft mbB
(86) International application number: PCT/CN2019/113731
(87) International publication number: WO 2020/151280

(56) References cited:
- EP-A1- 3 313 034
- EP-A1- 3 537 670
- EP-A1- 3 553 977
- EP-A1- 3 554 026
- EP-A1- 3 573 265
- CN-A- 106 357 421
- CN-A- 106 911 426
- CN-A- 106 911 426
- CN-A- 108 156 074
- CN-A- 108 183 764
- CN-A- 108 243 120
- CN-A- 108 809 674
- CN-A- 109 688 016
- US-B2- 8 861 334
- IA # OIF: "Flex Ethernet 2.0 Implementation Agreement", FLEX ETHERNET 2.0 IMPLEMENTATION AGREEMENT, 22 June 2018 (2018-06-22), US, pages 1 - 51, XP055726361, Retrieved from the Internet <URL:https://www.oiforum.com/wp-content/uploads/2019/01/OIF-FLEXE-02.0-1.pdf>

## Description

### TECHNICAL FIELD

Embodiments of the present invention relate to, but are not limited to, the Flex Ethernet (FlexE) technology, and more specifically relate to a method and related equipment for switching time slot configuration in FlexE protocol.

### BACKGROUND

In past ten years, a continuous rapid growth of network business traffic has prompted a rapid increase in a business bandwidth of communication equipment, an increase of an interface speed of the communication equipment from 10M bandwidth to 100M, 1G and 10G, and a business speed to be doubled every few years, to satisfy requirements of the network business traffic. At present, a commercial optical module for the communication equipment, a speed of which has reached 100G, has begun to be commercialized in large numbers. When the speed of the optical module starts to exceed 100G, research and development of an optical module technology becomes more and more difficult, and production costs of the optical module increase sharply. In the development from 100G to 400G, although a 400G optical module has been developed, a price of the 400G optical module is expensive and exceeds a total price of four 100G optical modules, resulting in a lack of commercial economic value of the 400G optical module. In order to satisfy delivery requirements of 400G businesses without increasing the costs, and to be able to deliver the 400G businesses on 100G optical modules, the International Standards Organization has defined a FlexE protocol.

A negotiation method for modifying time slot configuration content is defined in the FlexE protocol, which can dynamically modify a time slot of a client business delivered on a subcalendar of a FlexE group. In practical applications, when a fault occurs in the subcalendar of the FlexE group, the client business delivered on the subcalendar is interrupted due to the fault in the subcalendar. An equipment system may modify time slot configuration contents of all subcalendars in the FlexE group, delete a time slot relationship delivered on the failed subcalendar, and replace the time slot on the failed subcalendar with an idle time slot on a normally working subcalendar, so that the interrupted client business can be restored, thereby realizing a protection requirement of the client business. CN patent number CN108183764A disclosed that a multiframe sending method, a multiframe receiving method, a multiframe sending device, a multiframe receiving device, a communication device and a communication network system, wherein the method comprises the steps of: determining a multiframe identifier used for identifying the multiframe number according to the time slot number of a physical layer, wherein the multiframe number is the number of frames forming a multiframe; and sending the multiframe to a receiving end, wherein the multiframe carries the multiframe identifier. By means of the multiframe sending method, the multiframe receiving method, the multiframe sending device, the multiframe receiving device, the communication device and the communication network system provided by the invention, the problemthat a multiframe structure of a FLEXE protocol has poor bandwidth compatibility on different interfaces in a related technology can be solved; and thus, the effect of improving the bandwidth compatibility of the multiframe structure of the FLEXE protocol on different interfaces is achieved.

### SUMMARY

The embodiments of the present invention provides a method for switching time slot configuration in a FlexE protocol, the method is set out in the appended set of claims.

### BRIEF DESCRIPTION OF THE DRAWINGS

Fig. 1 is a schematic diagram of an application of a FlexE protocol.
Fig. 2 is a schematic diagram of an influence of a fault of a subcalendar in a FlexE protocol.
Fig. 3 is a schematic diagram of arrangement positions of overhead blocks and data blocks in a FlexE protocol.
Fig. 4 is a schematic diagram of a process of transmitting a client business on multiple physical channels in a group.
Fig. 5 is a schematic diagram of a process of receiving a client business on multiple physical channels in a group.
Fig. 6 is a schematic diagram of a frame structure in a FlexE protocol.
Fig. 7 is a schematic diagram of a multi-frame structure in a FlexE protocol.
Fig. 8 is a schematic diagram of a result of sharing and transmitting a client business among group subcalendars.
Fig. 9 is a schematic diagram of results of time slot configurations of three client businesses on each subcalendar of a group.
Fig. 10 is a schematic diagram of a fault of a subcalendar in a FlexE protocol affecting a client business.
Fig. 11 is a schematic diagram of a result of modifying time slot configuration content in a group.
Fig. 12 is a schematic diagram of a result of realizing business protection after modifying time slot configuration content.
Fig. 13 is a schematic diagram of a switching process of time slot configuration tables in a FlexE protocol standard.
Fig. 14 is a schematic flowchart of a method for switching time slot configuration in a FlexE protocol.
Fig. 15 is a schematic flowchart of a method for switching time slot configuration in a FlexE protocol.
Fig. 16 is a schematic flowchart of a method for switching time slot configuration in a FlexE protocol.
Fig. 17 is a schematic flowchart of a method for switching time slot configuration in a FlexE protocol.
Fig. 18 is a schematic diagram of a FlexE frame structure with an extended SP field.
Fig. 19 is a schematic flowchart of a method for switching time slot configuration in a FlexE protocol.
Fig. 20 is a schematic diagram of a FlexE frame structure with an extended SP field.
Fig. 21 is a schematic diagram of a FlexE frame structure with an extended SP field.
Fig. 22 is a schematic structural diagram of a device for switching time slot configuration in a FlexE protocol.
Fig. 23 is a schematic structural diagram of a device for switching time slot configuration in a FlexE protocol.

### DETAILED DESCRIPTION

In order to make objectives, technical solutions, and advantages of the present invention clearer, embodiments of the present invention will be described in detail below with reference to the accompanying drawings. It should be noted that the embodiments of the present application and features therein may be combined with each other in any manner as long as they are not contradictory.

Steps shown in flowcharts of the accompanying drawings may be executed in a computer system that executes computer-executable instructions. In addition, although logical sequences are shown in the flowcharts, in some cases, the steps shown or described may be performed in a sequence other than the sequences shown herein.

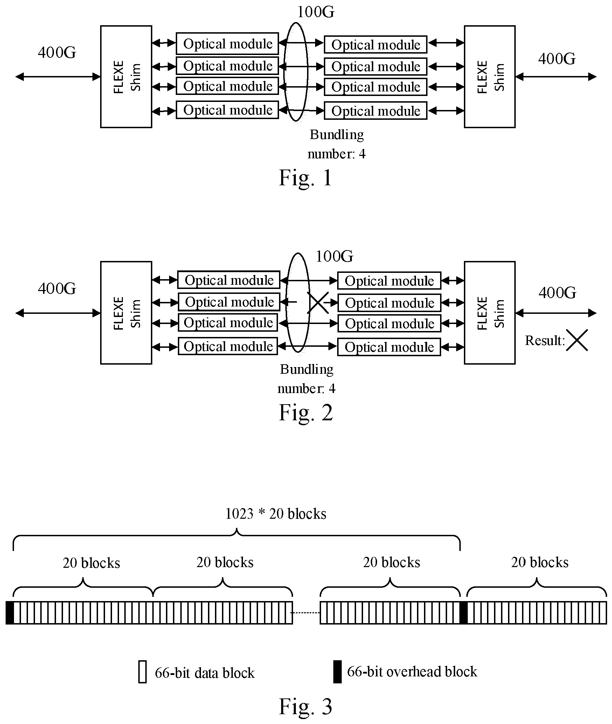

In a FlexE protocol, multiple 100G optical modules are bundled to form a high-speed delivery channel. As shown in Fig. 1, four 100G optical modules are bundled through a FlexE shim to form a 400G delivery channel, a delivery speed of which is equivalent to that of one 400G optical module, so as to satisfy a delivery requirement for a 400G business without increasing costs. Since in the FlexE protocol, multiple physical channels are bundled into one logical channel for business delivery, when one physical channel fails, the entire logical channel fails. As shown in Fig. 2, when one physical channel is interrupted, the entire logical channel is interrupted. In a practical application, it can be realized in a device that when a subcalendar in a FlexE group fails, other subcalendars cannot be affected, and the other subcalendars can deliver client businesses normally. In this way, a fault of the single subcalendar will only affect a client business delivered on the failed subcalendar, and does not affect client businesses delivered on the other subcalendars.

Currently, the FlexE protocol is defined according to a 100G rate of a physical layer. In an optical mode, before a 100G data packet is transmitted, the data packet is 64/66-bit encoded, that is, the data packet is cut into 64-bit data blocks, and then the 64-bit data blocks are expanded into 66-bit data blocks. The added 2 bits are located in front of each of the 66-bit data blocks, as a start mark of each of the 66-bit data blocks. The data packet is finally transmitted from an optical transmission interface in a form of the 66-bit data blocks. When being received, the 66-bit data blocks are identified from a data stream received by an optical transmission receiving interface, then the original 64-bit data blocks are recovered from the 66-bit blocks, and then the data packet is reconstituted.

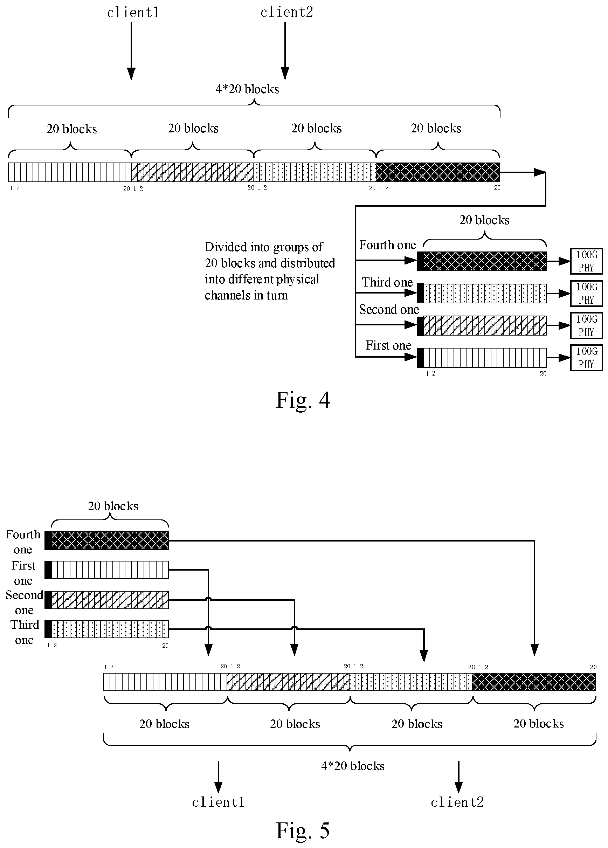

The FlexE protocol is located in a Physical Coding Sublayer (PCS) in an Ethernet protocol, and located behind a layer for converting the 64-bit data blocks to the 66-bit data blocks. An ordering and a planning for the 66-bit data blocks before transmitting the 66-bit data blocks are shown in Fig. 3. That is, for a 100G business, every twenty 66-bit data blocks are divided into a data block group. The twenty 66-bit data blocks in each group represent 20 time slots, and each time slot represents a business speed of a 5G (bit/s) bandwidth. The client business can be carried and delivered on 20 time slots. Groups of 20 time slots appear cyclically, and a FlexE overhead block is inserted every 1023 cycles to form a shim layer data block structure of the FlexE protocol: 1023*20. When 4 100G physical layers are bundled into a 400G logical business bandwidth, a time slot structure is composed of 80 (4*20) time slots. Calendar is 80 time slots and divided into 4 groups, each group has 20 time slots, and each group is a subcalendar. As shown in Fig. 4, in physical layers (PHY), each physical layer carries contents of a subcalendar. A data block group is still formed by twenty 66-bit data blocks, i.e., 20 time slots. The 20 time slots appear in cycles, and the FlexE overhead block is inserted every 1023 cycles. The Overhead blocks play a role in positioning, and multiple subcalendars perform positioning and sorting based on the overhead blocks to restore the business. When transmitting the 66-bit data blocks, after every 1023 data block groups (1023*20 66-bit data blocks) is transmitted, the FlexE overhead block, which is shown as a black block in Fig 4, is inserted. After the overhead block being inserted, the data block groups continues to be transmitted, and after a second batch of 1023*20 66-bit data blocks are transmitted, anther overhead block is inserted, and so on. In this way, in a process of transmitting the data blocks, the overhead blocks are periodically inserted, and an interval between two adjacent overhead blocks is 1023*20 66-bit data blocks. At a receiving end, as shown in Fig. 5, each physical layer detects received data and determines each 66-bit data block; and after the FlexE overhead block (i.e., an information block of black color) is identified, 20 time slots can be determined. When the logical channel is formed by bundling multiple physical channels, each physical channel determines its own 20 time shot by positioning the FlexE overhead block separately. Then the overhead blocks are used as alignment reference marks, and a queuing order of the subcalendars (i.e., an order of serial numbers of the subcalendars from small to large) is determined according to a serial number of a present subcalendar carried in the overhead block in each physical channel. Time slots of all the subcalendars are formed into a big shim structure: 1023*20*n (n is a number of subcalendars in one group), and then the client business is restored.

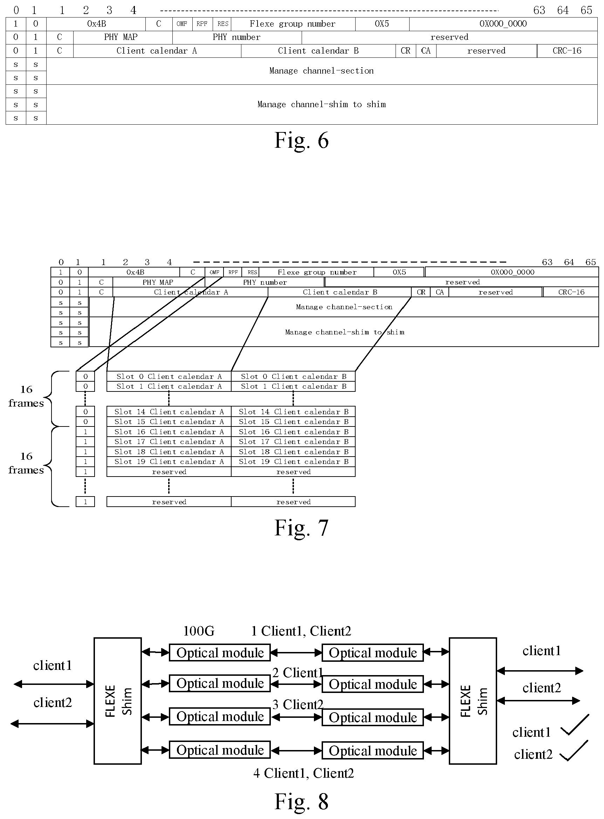

The FlexE overhead block is an overhead block with a length of 66 bits. When the business data is streamed, the overhead block is inserted every 1023*20 data blocks. One overhead block has 66 bits in length, and composed of a 2-bit block flag and 64-bit block contents. The block flag is located in the first 2 columns, and the next 64 columns are the block contents. The overhead block plays a positioning function in the entire business stream. When the overhead block is found, a position of a first time slot in the business and positions of subsequent time slots can be known. In the FlexE protocol, 8 overhead blocks are defined to form a frame (i.e., a FlexE overhead frame). A block flag of a first overhead block is 10, and block flags of subsequent 7 overhead blocks are 01 or SS (SS means contents are uncertain). As shown in Fig. 6, the first overhead block is identified by two fields 4B (which is in hexadecimal, and identified as 0x4B) and 05 (which is in hexadecimal, and identified as 0x5). When it is detected that contents at corresponding positions in the overhead block are 4B and 05, it means that the overhead block is the first overhead block, and the first overhead block and the subsequent 7 overhead blocks form a frame. The contents of the first overhead block are: 0x4B (which occupies 8 bits, and is 4B in hexadecimal), C bit (which occupies 1 bit, and indicates adjustment control), OMF bit (which occupies 1 bit, and indicates a multi-frame indication of an overhead frame), RPF bit (which occupies 1 bit, and indicates an remote defect indication), RES bit (which occupies a 1 bit, and indicates a reserved bit), FlexE group number (which occupies 20 bits, and indicates a serial number of a group), 0x5 (which occupies 4 bits, and is 5 in hexadecimal), and 000000 (which occupies 28 bits, and all of the 28 bits are 0). 0x4B and 0x5 are flag indicators of the first overhead block. When an overhead block being received and it is found that contents at corresponding positions in the overhead block are 4B and 05, it means that the overhead block is the first overhead block, and the first overhead block and subsequent 7 consecutive overhead blocks form an overhead frame. In the overhead frame, a reserved part is reserved content (i.e., a reserved field), which has not been defined yet.

In a structure of the FlexE overhead frame, the FlexE group number represents a group identifier, and all subcalendars with the same group number belong to a same group. A PHY number is a serial number of a subcalendar. In the same group, the PHY number of each subcalendar is unique. When being sorted, all subcalendars are sorted according to a sorting rule of PHY number from small to large. The PHY number is 8-bit data, which can represent all serial numbers from 0 to 255, and thus there are up to 256 subcalendars in one group. In the current standard, 0 and 255 are defined as reserved serial numbers for special applications, and normal subcalendars use serial numbers from 1 to 254.

In the first overhead block, the OMF field is a multi-frame indication signal, as shown in Fig. 7. OMF is a single-bit value, which is 0 in 16 consecutive frames, then is 1 in 16 consecutive frames, then is 0 in 16 consecutive frames, and then is 1 in consecutive 16 frames, which is repeated every 32 frames, so that a multi-frame is composed of 32 frames. In the frame, a Client calendar field indicates a name of a client carried by each time slot, and indicates the client to which the time slot belongs. A number of time slots required for a client business to be carried is uncertain, and needs to be flexibly modified. Therefore, the Client calendar has two kinds of configuration information, a Client calendar A and a Client calendar B. Values of the two kinds of configuration mean a working state and a standby state respectively, which are used for switching configuration information dynamically and smoothly. In the FlexE frame structure, there are three C bits. When all the C bits are "0", the Client calendar A is in the working state and the Client calendar B is in the standby state; and on the contrary, when all the C bits are "1", the Client calendar A is in the standby state and the Client calendar B is in the working state. At a same point in time, only one set of the Client calendar is in the working state, and the other set of the Client calendars is in the standby state. The switch of the state of the Client calendar is negotiated through the CR bit and the CA bit. A request is initiated through the CR bit, and the request is answered through the CA bit. When it is needed to modify the time slot configuration, configuration contents of the Client calendar in the standby state are modified, and at the same time the CR bit is reversed to notify an opposite end that the state of the Client calendar needs to be switched. The opposite end prepares according to the value of the Client calendar in the standby state, and transmits a CA response signal back to an initiator end after the preparing is ready. After the two ends negotiate an agreement, a switching process of the time slot configuration is started, in which the initiator end reverses the value of the C bit, the Client calendar that was in the working state switches to be in the standby state, the Client calendar that was in the standby state switches to be in the working state, thereby realizing a dynamic modification of the time slot configuration contents of the Client calendars.

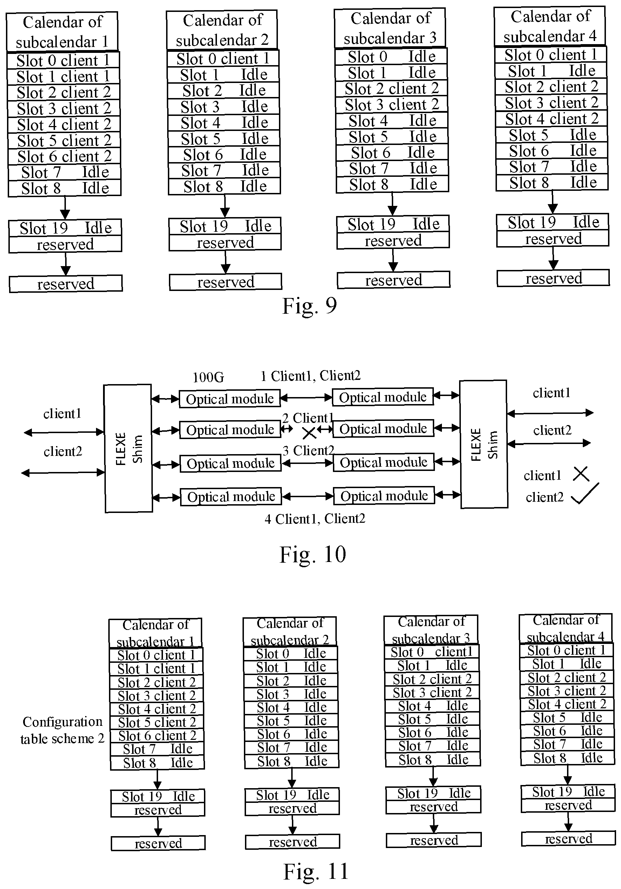

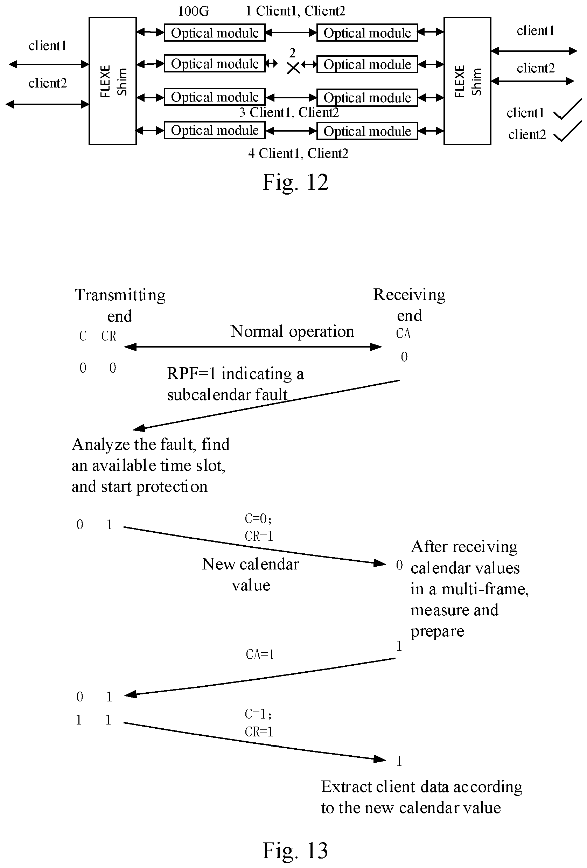

The negotiation method for modifying the time slot configuration contents is defined in the FlexE protocol, which can dynamically modify time slots of a client business delivered on the subcalendars in the FlexE group. In practical applications, when a subcalendar in the FlexE group fails, a client business delivered on the subcalendar is interrupted due to the subcalendar's failure An equipment system may modify time slot configuration contents of all the subcalendars in the FlexE group, delete a time slot relationship delivered on the failed subcalendar, and replace a time slot on the failed subcalendar with an idle time slot on a normally working subcalendar, so that the interrupted client business can be restored, thereby realizing protection requirements of the client businesses. For example, Fig. 8 shows that a FlexE group is composed of 4 subcalendars, and 2 client businesses (including client 1 and client 2) are delivered through the group. A client bandwidth of the client 1 is 20G, and the client 1 requires 4 time slots for delivery. The client 1 is delivered through time slots of a subcalendar 1 (undertaking 2 time slots), a subcalendar 2 (undertaking 1 time slot), and a subcalendar 4 (undertaking 1 time slot). A client bandwidth of the client 2 is 50G, and is delivered through time slots of the subcalendar 1 (undertaking 5 time slots), a subcalendar 3 (undertaking 2 time slots), and the subcalendar 4 (undertaking 4 time slots). A result of time slot configuration on each subcalendar is shown in Fig. 9. When the subcalendar 2 in the group fails, as shown in Fig. 10, since a time slot (slot 0) in the subcalendar 2 delivers a business of the client 1, the business of the client 1 is interrupted due to the fault of the subcalendar 2. There is no business of the client 2 delivered on the subcalendar 2, and thus the business of the client 2 can be delivered normally. When the subcalendar 2 fails, time slots configured on the subcalendar 2 needs to be adjusted to another subcalendar. For example, the time slot (slot 0) configured on the subcalendar 2 may be adjusted to a time slot (slot 0) configured on the subcalendar 3, as shown in Fig. 11. In this way, the subcalendar 2 does not undertake any client business, and the business of the client 1 is undertaken by the subcalendar 1, the subcalendar 3 and the subcalendar 4, and normal transmission of the business of the client 1 is restored, as shown in Fig. 12. The time slot responsible for the client 1 is re-configured from the subcalendar 2 to the subcalendar 3, thereby passing the failed subcalendar 2, and realizing protection and restoration of the client businesses.

However, the current negotiation method for the time slot configuration defined in the FlexE protocol is a method of handshake negotiation between devices at both ends, in which the CR bit and the CA bit are used for negotiation to deliver new time slot configuration contents, and then the time slot configuration is switched through the C bit. Many processes are involved when applying the time slot re-configuration method in the FlexE protocol for business protection, such as: 1) analyzing a failed time slot, 2) finding a replacement time slot, 3) transmitting contents of a new time slot configuration table, 4) shaking hands by both ends for negotiation, and 5) switching a time slot configuration table, etc. Therefore, the business protection process involves too many processes, the negotiation process has a long waiting time, and the processes are started only after a fault occurs, which results that a business is interrupted for a long time, which cannot satisfy a requirement for the business to return to normal within 50 ms. For example, as shown in Fig. 13, when a physical subcalendar channel fails, the method that needs to be performed for business recovery is modifying time slot configuration contents of a client, in which a time slot carried on the failed subcalendar is reconfigured to another subcalendar. The specific process involves the following operations: 1) fault diagnosis, including: a state of diagnosing a FlexE frame is transmitted, RPF (Remote PHY (Physical Layer) Fault) information returned by a receiving end is analyzed, and a failed subcalendar is determined; 2) analysis of a failed time slot, including: which client business is carried on the failed subcalendar, a number of corresponding time slots and locations of the time slots are analyzed; 3) searching for a replacement time slot, including: an idle time slot on a normal subcalendar is found, the replacement time slot is re-configured for the failed time slot of the failed client business, and contents of a new time slot configuration table are planned; 4) delivery of new time slot configuration contents, including: the contents of the newly planned time slot configuration table are delivered to the receiving end device; 5) starting a handshake negotiation process, including: the transmitting end initiates a handshake protocol to notify the receiving end of the time slot configuration contents that needs to be switched, the receiving end receives the new time slot configuration contents, and the receiving end delivers a response message to the transmitting end after preparations is ready; and 6) switch of the time slot configuration table, including: the transmitting end and the receiving end switch the time slot configuration contents, and the transmitting end and the receiving end deliver the client business according to the new time slot configuration contents. In the entire operation process, analyzing the failed time slot, finding the replacement time slot, and transmitting contents of the new time slot configuration table are the preparations for switching the time slot configuration, and shaking hands for negotiation and switching the time slot configuration are the real switching process. When a subcalendar fails, the preparations for switching the time slot configuration take a long time, which prolongs time for restoring the business, and causes the business to be unable to restore within 50 ms after the interruption.

Therefore, the embodiments of the present invention provide a new scheme for realizing business protection in the FlexE protocol, in which the business protection process includes a preparation part before switching time slot configuration and an operation part of switching the time slot configuration. The preparation part before switching the time slot configuration is completed before a fault occurs, and only the operation part of the switching is completed after the fault occurs, which can greatly reduce interruption time of a business and satisfy a protection requirement that the interruption time is less than 50 ms.

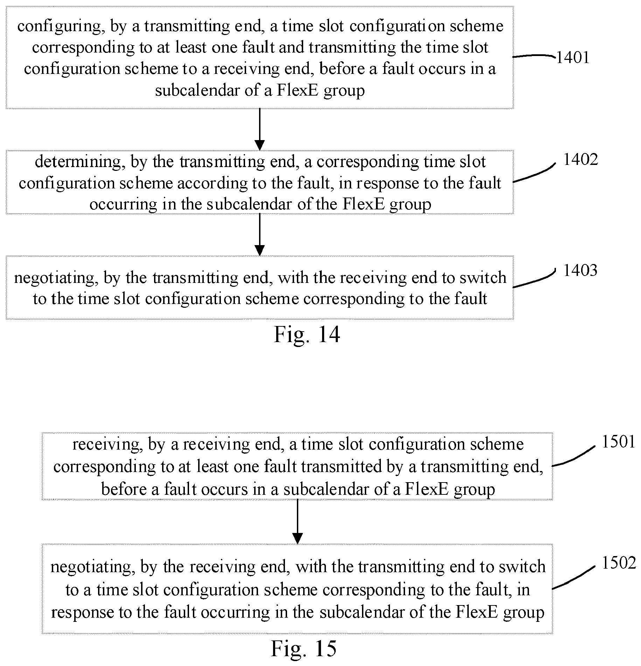

Fig. 14 is a schematic flowchart of a method for switching time slot configuration in a FlexE protocol. As shown in Fig. 14, the method includes the following steps.

In step 1401, a time slot configuration scheme corresponding to at least one fault is configured and transmitted to a receiving end by a transmitting end, before a fault occurs in a subcalendar of a FlexE group.

In step 1402, a corresponding time slot configuration scheme is determined by the transmitting end according to the fault, when the fault occurs in the subcalendar of the FlexE group.

In step 1403, it is negotiated by the transmitting end with the receiving end to switch to the time slot configuration scheme corresponding to the fault.

Each fault corresponds to one time slot configuration scheme corresponding to one serial number, and the one time slot configuration scheme is time slot configuration contents to be re-configured after the fault occurs.

The time slot configuration scheme corresponding to the at least one fault configured by the transmitting end is transmitted to the receiving end in one of the following manners: a manner of network management protocol configuring, a manner of a management channel in a FlexE frame, or a manner of a fixed field in the FlexE frame.

Transmitting the configured time slot configuration scheme corresponding to the at least one fault to the receiving end in the manner of the fixed field in the FlexE frame includes: the transmitting end transmits a first FlexE frame composed of continuous FlexE overhead frames to the receiving end; and a reserved field area in the FlexE overhead frames includes a SP field including a serial number part and a flag part, the serial number part indicates a serial number of the time slot configuration scheme, and the flag part indicates whether to enable a time slot configuration scheme mode. A value of a CR bit in the FlexE overhead frames is set to be reversed, and the flag part is set to indicate enabling, to notify the receiving end of receiving and saving the time slot configuration scheme corresponding to the fault and the serial number of the time slot configuration scheme. A Client calendar field in a standby state in the FlexE overhead frames delivers the time slot configuration scheme corresponding to the fault.

The first FlexE frame may be a frame composed of 20 consecutive FlexE overhead frames, or may be a FlexE multi-frame composed of 32 consecutive FlexE overhead frames.

One first FlexE frame delivers one time slot configuration scheme, and after transmitting the one first FlexE frame, the transmitting end resets the CR bit value after receiving a CA bit response transmitted by the receiving end.

The transmitting end negotiating with the receiving end to switch to the time slot configuration scheme corresponding to the fault includes: the transmitting end transmits at least one FlexE overhead frame to the receiving end; where the value of the CR bit in the at least one FlexE overhead frame is set to be reversed, the serial number part of the SP field indicates the serial number of the time slot configuration scheme corresponding to the fault, and the flag part is set to indicate enabling, to notify the receiving end to switch to the time slot configuration scheme corresponding to the fault; and after receiving the CA bit response transmitted by the receiving end, the transmitting end reverses the C bit, switches to the time slot configuration scheme corresponding to the fault, and transmits a business according to the time slot configuration scheme corresponding to the fault.

Transmitting the configured time slot configuration scheme corresponding to the at least one fault to the receiving end in the manner of the fixed field in the FlexE frame includes: the transmitting end transmits the first FlexE frame composed of continuous FlexE overhead frames to the receiving end; a slot position of the Client calendar field and/or a reserved field of the Client calendar field in the FlexE overhead frames includes the SP field including the serial number part and the flag part, where the flag part is used for indicating whether to enable a time slot configuration scheme mode; and the serial number part of the SP field in the Client calendar field in a working state is used for indicating a serial number of a currently used time slot configuration scheme, and the serial number part of the SP field in the Client calendar field in the standby state is used for indicating the serial number of the time slot configuration scheme. The value of the CR bit in the FlexE overhead frames is set to be reversed, the flag part of the SP field in the Client calendar field in the working state is set to disable, and the flag part of the SP field in the Client calendar field in the standby state is set to enable, to notify the receiving end of receiving and saving the time slot configuration scheme corresponding to the fault and the serial number of the time slot configuration scheme. The Client calendar field in the standby state in the FlexE overhead frames delivery the time slot configuration scheme corresponding to the fault.

The first FlexE frame may be the frame composed of 20 consecutive FlexE overhead frames, or may be the FlexE multi-frame composed of 32 consecutive FlexE overhead frames.

The slot position of the Client calendar field and/or the reserved field of the Client calendar field in the FlexE overhead frame including the SP field includes: all Client calendar A fields and Client calendar B fields in the FlexE multi-frame include the SP field.

One first FlexE frame delivers one time slot configuration scheme, and after transmitting the one first FlexE frame, the transmitting end resets the value of the CR bit after receiving the CAbit response transmitted by the receiving end.

The transmitting end negotiating with the receiving end to switch to the time slot configuration scheme corresponding to the fault includes: the transmitting end transmits the at least one FlexE overhead frame to the receiving end. The value of the CR bit value in the at least one FlexE overhead frame is set to be reversed, the serial number part of the SP field of the Client calendar in the working state indicates the serial number of the time slot configuration scheme corresponding to the fault, and the flag part of the SP field of the Client calendar in the working state is set to indicate enabling, to notify the receiving end to switch to the time slot configuration scheme corresponding to the fault.

After receiving the CA bit response transmitted by the receiving end, the transmitting end reverses the C bit, switches to the time slot configuration scheme corresponding to the fault, and transmits the business according to the time slot configuration scheme corresponding to the fault.

The first FlexE frame may be the frame composed of 20 consecutive FlexE overhead frames, or may be the FlexE multi-frame composed of 32 consecutive FlexE overhead frames.

The Client calendar field in the standby state in the FlexE overhead frame delivers the time slot configuration scheme corresponding to the fault.

Transmitting the configured time slot configuration scheme corresponding to the at least one fault to the receiving end in the manner of network management protocol configuring includes: the transmitting end transmits a first network management message to the receiving end. The first network management message carries the time slot configuration scheme corresponding to the at least one fault configured by the transmitting end and its serial number.

The transmitting end negotiating with the receiving end to switch to the time slot configuration scheme corresponding to the fault includes: the transmitting end transmits a second network management message to the receiving end, the second network management message carries the serial number of the time slot configuration scheme corresponding to the fault, and the second network management message is used for notify the receiving end to switch to the time slot configuration scheme corresponding to the fault; and after receiving a switching ready response message transmitted by the receiving end, the transmitting end switches to the time slot configuration scheme corresponding to the fault, transmits a switching completion confirmation message to the receiving end, and transmits the business according to the time slot configuration scheme.

Transmitting the configured time slot configuration scheme corresponding to the at least one fault to the receiving end in the manner of the management channel in the FlexE frame includes: the transmitting end encapsulates the configured time slot configuration scheme corresponding to the at least one fault and its serial number into an Ethernet packet, carries the Ethernet packet in a management channel field in the FlexE frame, and transmits it to the receiving end.

Negotiating with the receiving end to switch to the time slot configuration scheme corresponding to the fault includes: the transmitting end encapsulates the serial number of the time slot configuration scheme corresponding to the fault into the Ethernet packet, carries the Ethernet packet in the management channel field in the FlexE frame, and transmits it to the receiving end; and after receiving the switching ready response packet transmitted by the receiving end, the transmitting end switches to the time slot configuration scheme corresponding to the fault, transmits the switching completion confirmation packet to the receiving end, and transmits the business according to the time slot configuration scheme.

Fig. 15 is a schematic flowchart of a method for switching time slot configuration in a FlexE protocol. As shown in Fig. 15, the method includes the following steps.

In step 1501, a time slot configuration scheme corresponding to at least one fault transmitted by a transmitting end is received by a receiving end, before a fault occurs in a subcalendar of a FlexE group.

In step 1502, it is negotiated by the receiving end with the transmitting end to switch to a time slot configuration scheme corresponding to the fault, when the fault occurs in the subcalendar of the FlexE group.

Each fault corresponds to one time slot configuration scheme corresponding to one serial number, and the one time slot configuration scheme is time slot configuration contents to be re-configured after the fault occurs.

The time slot configuration scheme corresponding to the at least one fault is received in one of the following manners: a manner of network management protocol configuring, a manner of a management channel in a FlexE frame, or a manner of a fixed field in the FlexE frame.

Receiving the time slot configuration scheme corresponding to the at least one fault in the manner of the fixed field in the FlexE frame includes: a first FlexE frame composed of continuous FlexE overhead frames transmitted by the transmitting end is received by the receiving end; and a reserved field area in the FlexE overhead frames includes a SP field including a serial number part and a flag part, the serial number part indicates a serial number of the time slot configuration scheme, and the flag part indicates whether to enable a time slot configuration scheme mode. A value of a CR bit in the FlexE overhead frames is set to be reversed, and the flag part is set to indicate enabling, to notify the receiving end of receiving and saving the time slot configuration scheme corresponding to the fault and the serial number of the time slot configuration scheme. A Client calendar field in a standby state in the FlexE overhead frames delivers the time slot configuration scheme corresponding to the fault.

The first FlexE frame may be a frame composed of 20 consecutive FlexE overhead frames, or may be a FlexE multi-frame composed of 32 consecutive FlexE overhead frames.

One first FlexE frame delivers one time slot configuration scheme, and after receiving the one first FlexE frame, the method further includes: the time slot configuration scheme corresponding to the fault and its serial number are saved by the receiving end, and a CA bit response is transmitted to the transmitting end by the receiving end.

The receiving end negotiating with the transmitting end to switch to the time slot configuration scheme corresponding to the fault, includes: the receiving end receives at least one FlexE overhead frame transmitted by the transmitting end; where the value of the CR bit in the at least one FlexE overhead frame is set to be reversed, the serial number part of the SP field indicates the serial number of the time slot configuration scheme corresponding to the fault, and the flag part is set to indicate enabling, to notify the receiving end to switch to the time slot configuration scheme corresponding to the fault; and the receiving end obtains the saved time slot configuration scheme corresponding to the fault according to the serial number, completes a switching preparation work, transmits a CA bit response for switching ready to the transmitting end, switches to the time slot configuration scheme corresponding to the fault after detecting that the transmitting end reverses the C bit and receives a business according to the time slot configuration scheme.

Receiving the time slot configuration scheme corresponding to the at least one fault in the manner of the fixed field in the FlexE frame includes: the receiving end receives the first FlexE frame composed of the continuous FlexE overhead frames transmitted by the transmitting end; a slot position of the Client calendar field and/or a reserved field of the Client calendar field in the FlexE overhead frames includes the SP field, the SP field includes the serial number part and the flag part, and the flag part is used for indicating whether to enable a time slot configuration scheme mode; and the serial number part of the SP field in the Client calendar field in a working state is used for indicating a serial number of a currently used time slot configuration scheme, and the serial number part of the SP field in the Client calendar field in the standby state is used for indicating the serial number of the time slot configuration scheme.

The value of the CR bit in the FlexE overhead frames is set to be reversed, the flag part of the SP field in the Client calendar field in the working state is set to disable, and the flag part of the SP field in the Client calendar field in the standby state is set to enable, to notify the receiving end of receiving and saving the time slot configuration scheme corresponding to the fault and the serial number of the time slot configuration scheme.

The Client calendar field in the standby state in the FlexE overhead frame delivers the time slot configuration scheme corresponding to the fault.

The first FlexE frame may be the frame composed of 20 consecutive FlexE overhead frames, or may be the FlexE multi-frame composed of 32 consecutive FlexE overhead frames.

The slot position of the Client calendar field and/or the reserved field of the Client calendar field in the FlexE overhead frame including the SP field includes: all Client calendar A fields and Client calendar B fields in the FlexE multi-frame include the SP field.

One first FlexE frame delivers one time slot configuration scheme, and after receiving the one first FlexE frame, the method further includes: the receiving end saves the time slot configuration scheme corresponding to the fault and its serial number, and transmits the CA bit response to the transmitting end.

The receiving end negotiating with the transmitting end to switch to the time slot configuration scheme corresponding to the fault, includes: the receiving end receives at least one FlexE overhead frame transmitted by the transmitting end; where the value of the CR bit in the at least one FlexE overhead frame is set to be reversed, the serial number part of the SP field indicates the serial number of the time slot configuration scheme corresponding to the fault, and the flag part is set to indicate enabling, to notify the receiving end to switch to the time slot configuration scheme corresponding to the fault; and the receiving end obtains the saved time slot configuration scheme corresponding to the fault according to the serial number, completes the switching preparation work, transmits the CA bit response for switching ready to the transmitting end, switches to the time slot configuration scheme corresponding to the fault after detecting that the transmitting end reverses the C bit, and receives the business according to the time slot configuration scheme.

The first FlexE frame may be the frame composed of 20 consecutive FlexE overhead frames, or may be the FlexE multi-frame composed of 32 consecutive FlexE overhead frames.

The Client calendar field in the standby state in the FlexE overhead frame delivers the time slot configuration scheme corresponding to the fault.

Receiving the time slot configuration scheme corresponding to the at least one fault in the manner of network management protocol configuring includes: the receiving end receives a first network management message transmitted by the transmitting end, and the time slot configuration scheme corresponding to the at least one fault configured by the transmitting end and its serial number are carried by the first network management message.

The receiving end negotiating with the transmitting end to switch to the time slot configuration scheme corresponding to the fault, includes: the receiving end receives a second network management message transmitted by the transmitting end, the second network management message carries the serial number of the time slot configuration scheme corresponding to the fault, and the second network management message is used for notify the receiving end to switch to the time slot configuration scheme corresponding to the fault; the receiving end obtains the saved time slot configuration scheme corresponding to the fault according to the serial number, completes the switching preparation work, transmits the switching ready response message to the transmitting end, receives the business according to the time slot configuration scheme after receiving a switching completion confirmation message transmitted by the transmitting end.

Receiving the time slot configuration scheme corresponding to the at least one fault in the manner of the management channel in the FlexE frame includes: the receiving end receives the FlexE frame transmitted by the transmitting end, a management channel field in the FlexE frame carries an Ethernet packet, and the Ethernet packet carries the time slot configuration scheme corresponding to the at least one fault and its serial number.

The receiving end negotiating with the transmitting end to switch to the time slot configuration scheme corresponding to the fault, includes: the receiving end receives the FlexE frame transmitted by the transmitting end, the management channel field in the FlexE frame carries the Ethernet packet, and the Ethernet packet carries the serial number of the time slot configuration scheme corresponding to the fault; the receiving end obtains the saved time slot configuration scheme corresponding to the fault according to the serial number, completes the switching preparation work, transmits a switching ready response packet to the transmitting end, and receives the business according to the time slot configuration scheme after receiving a switching completion confirmation packet transmitted by the transmitting end.

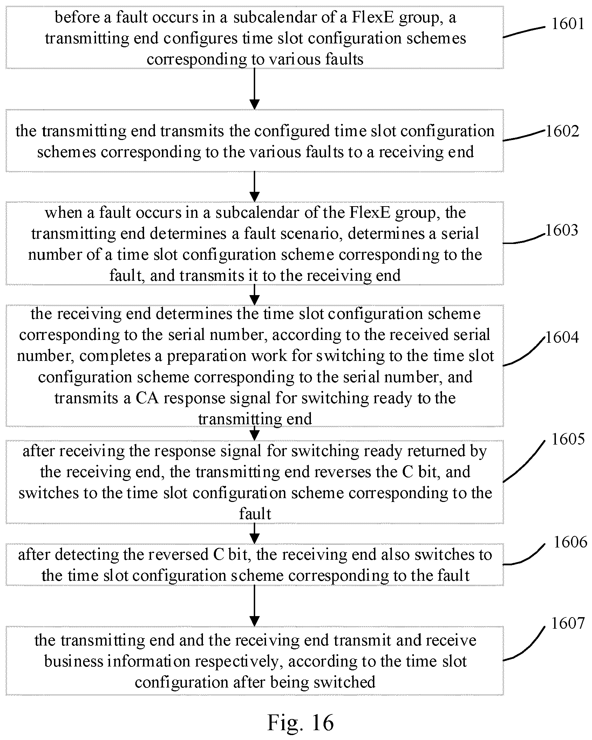

Fig. 16 is a schematic flowchart of a method for switching time slot configuration in a FlexE protocol. As shown in Fig. 16, the method includes the following steps.

In step 1601, before a fault occurs in a subcalendar of a FlexE group, a transmitting end configures time slot configuration schemes corresponding to various faults.

Each fault may also be referred to as a business protecting scenario. Therefore, when the subcalendar of the FlexE group fails, business protection is required. Configuring the time slot configuration schemes corresponding to the various faults may also be said to formulate a time slot configuration scheme corresponding to each scenario of various business protecting scenarios.

The fault refers to various fault scenarios in which the subcalendar of the FlexE group fails. For example, when the group has 4 subcalendars, various faults refer to scenarios in which a subcalendar 1 failed, a subcalendar 2 failed, a subcalendar 3 failed, a subcalendar 4 failed, subcalendars 1 and 2 failed, subcalendars 1 and 3 failed, and so on. Configuring the time slot configuration schemes corresponding to various faults is to plan corresponding time slot configuration schemes for various fault scenarios. Each fault corresponds to one time slot configuration scheme including contents of a time slot configuration table and a serial number. For example, configuring a time slot configuration scheme for the fault of the subcalendar 1 includes: configuring a time slot configuration table 1 and numbering it with 1; configuring a time slot configuration scheme for the fault of the subcalendar 2 includes: configuring a time slot configuration table 2 and numbering it with 2; configuring a time slot configuration scheme for the fault of the subcalendar 3 includes: configuring a time slot configuration table 3 and numbering it with 3; configuring a time slot configuration scheme for the fault of the subcalendar 4 includes: configuring a time slot configuration table 4 and numbering it with s 4; configuring a time slot configuration scheme for the faults of the subcalendars 1 and 2 includes: configuring a time slot configuration table 5 and numbering it with 5; and configuring a time slot configuration scheme for the faults of the subcalendars 1 and 3 includes: configuring a time slot configuration table 6 and numbering it with 6, and so on. Time slot configuration schemes for protection operations in all or multiple fault scenarios may be planned, or time slot configuration schemes only for protection operations in single-subcalendar fault scenarios may be planned, that is, only the single-subcalendar fault scenarios are supported.

Specifically, step 1601 may include the following steps.

In step 1601-1, a number of the subcalendars in the FlexE group is determined.

In step 1601-2, a number of and positions of time slots of a client business configured on each subcalendar in the group are determined.

In step 1601-3, a number of and positions of idle time slots on each subcalendar in the group are determined.

In step 1601-4, fault scenarios of the subcalendars in the group are determined, including a single-subcalendar fault type and a multi-subcalendars fault type.

In step 1601-5, an idle time slot of another subcalendar to which a time slot of a client business on a failed subcalendar is re-configured is determined, when each fault scenario occurs; for example, as shown in Fig. 11.

In step 1601-6, contents of a time slot configuration table re-configured through a protection operation in each fault scenario is formulated, the time slot configuration table is numbered according to the fault scenario, and the time slot configuration table and its serial number are determined as the time slot configuration scheme corresponding to the fault.

In step 1602, the configured time slot configuration schemes corresponding to the various faults are transmitted to a receiving end by the transmitting end.

One of the following manners may be selected to transmit the time slot configuration schemes: 1) a manner of network management protocol configuring, 2) a manner of a management channel in a FlexE frame, and 3) a manner of a fixed field in the FlexE frame.

If the time slot configuration schemes are transmitted in the manner of the management channel in the FlexE frame or the fixed field in the FlexE frame, a CR and CA handshake negotiation mechanism in the FlexE protocol may be used. Specifically, for example, if the manner of the fixed field in the FlexE frame is adopted, step 1602 may include the following steps.

In step 1602-1, a time slot configuration scheme field (hereinafter referred to as a SP field) is defined in a reserved field area in a FlexE frame structure. The SP field includes a flag part and a serial number part, the serial number part is used for indicating a serial number of a time slot configuration scheme, and the flag part is used for indicating whether to enable a time slot configuration scheme mode.

In step 1602-2, the transmitting end instructs the receiving end by reversing a value of a CR bit in the FlexE frame and combining it with the SP field, and delivers the configured time slot configuration scheme through a Client calendar field in a standby state in the FlexE frame.

Specifically, for example, the flag part of the SP field is initially assigned a value of 1 to indicate disabling, which indicates that the time slot configuration scheme mode is not enabled, and an operation is performed in accordance with an existing protocol. The flag part of the SP field is assigned a value of 0 to indicate enabling, which combined with the reversed CR bit, is used for notifying the receiving end to receive and save the transmitted time slot configuration scheme and the serial number of the time slot configuration scheme.

In step 1602-3, the receiving end determines the serial number of the transmitted time slot configuration scheme according to the SP field and the CR bit, saves the received time slot configuration scheme and the corresponding serial number, and transmits a CA response message back to the transmitting end after completing the receiving.

In step 1602-4, after receiving the CA response message, the transmitting end confirms that the delivery of contents of the time slot configuration scheme is completed, and restores the reversed CR bit value.

In addition, if there are other time slot configuration schemes to be transmitted, the transmitting end may repeat steps 1602-2 to 1602-4 until all time slot configuration schemes are delivered.

In step 1603, when a fault occurs in a subcalendar of the FlexE group, the transmitting end determines a fault scenario, determines a serial number of a time slot configuration scheme corresponding to the fault, and transmits it to the receiving end.

Specifically, step 1603 may include the following steps.

In step 1603-1, the group detects working states of FlexE frame signals of all subcalendars, as well as RPF bit information in the frames, and determines the failed subcalendar and the current fault scenario.

In step 1603-2, the transmitting end determines the serial number of the corresponding time slot configuration scheme according to the fault scenario.

In step 1603-3, the transmitting end delivers the determined serial number to the receiving end.

The delivery may be through the SP field defined in the FlexE frame, through the manner of network management protocol configuring, through the management channel in the FlexE frame, or through a commonly used out-of-band delivery in the communication technology field.

The SP field may have many forms. The SP field may be a single bit or a combination of multiple bits; and the SP field may be transmitted in the FlexE frame or in a FlexE multi-frame.

In step 1604, the receiving end determines the time slot configuration scheme corresponding to the serial number, according to the received serial number, completes a preparation work for switching to the time slot configuration scheme corresponding to the serial number, and transmits a CA response signal for switching ready to the transmitting end.

Specifically, step 1604 may include the following steps.

In step 1604-1, after determining that the CR bit of the FlexE frame delivered by the transmitting end is reversed, the receiving end determines whether the flag part in the SP field of the FlexE frame indicates enabling.

In step 1604-2, when it is determined that the flag part in the SP field indicates disabling, the receiving end works in accordance with a mode of the existing FlexE protocol standard.

In step 1604-3, when it is determined that the flag part in the SP field indicates enabling, it is determined whether the time slot configuration scheme corresponding to the serial number is stored locally.

If there is the time slot configuration scheme corresponding to the serial number stored locally, the receiving end transmits the CA response signal back to the transmitting end, and prepares for the time slot switching operation; and if there is no time slot configuration scheme corresponding to the serial number stored locally, the receiving end receives and saves a time slot configuration scheme and its serial number currently being transmitted in the FlexE frame, and prepares for the time slot switching operation.

In step 1604-4, the receiving end completes a switching preparation work, and then transmits the CA response signal back to the transmitting end.

In step 1605, after receiving the response signal for switching ready returned by the receiving end, the transmitting end reverses the C bit, and switches to the time slot configuration scheme corresponding to the fault.

In step 1606, after detecting the reversed C bit, the receiving end also switches to the time slot configuration scheme corresponding to the fault.

In step 1607, the transmitting end and the receiving end transmit and receive business information respectively, according to the time slot configuration after being switched.

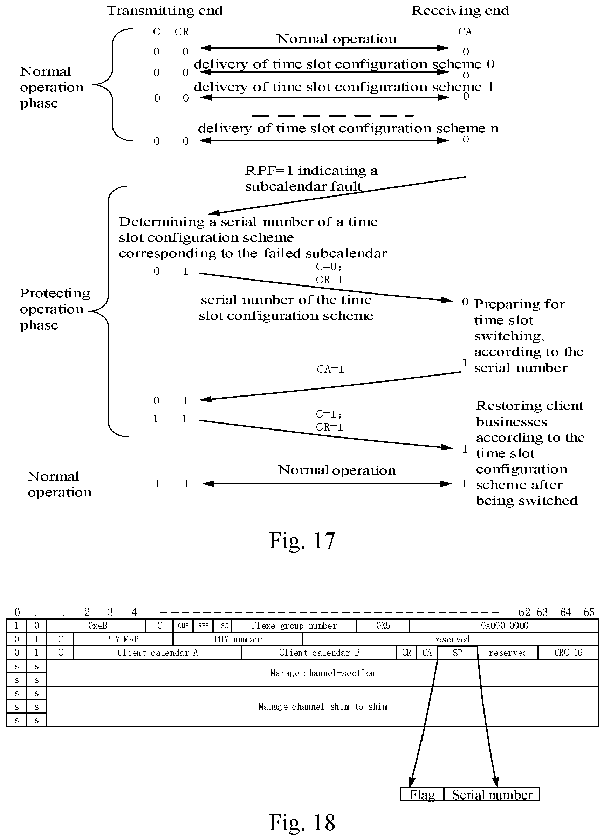

Fig. 17 is a schematic flowchart of a method for switching time slot configuration in a FlexE protocol. As shown in Fig. 17, the method includes a normal operation phase and a protecting operation phase.

In the normal operation phase in which when there is no fault occurs, time slot configuration schemes corresponding to various fault scenarios are configured in advance according to various scenarios of subcalendar faults, and transmitted to a receiving end. As shown in Fig. 17, the specific configuration and transmission process of configuring and transmitting n time slot configuration schemes may be referred to the above-mentioned implementations.

In the protecting operation phase in which a subcalendar fails, a serial number of a corresponding time slot configuration scheme is directly determined according to the fault scenario. A transmitting end initiates a switching negotiation activity directly, reverses CR to 1, and delivers the serial number of the time slot configuration scheme to the receiving end by combining a SP field. The receiving end confirms the time slot configuration scheme corresponding to the serial number, prepares for time slot switching, and transmits a CA response to the transmitting end after the preparation is completed. The transmitting end transmits a reversed C bit to the receiving end to notify a formal switching to the time slot configuration scheme. The receiving end also switches to the time slot configuration scheme corresponding to the serial number after detecting that the transmitting end reversed the C bit. The transmitting end and the receiving end deliver a client business according to the time slot configuration scheme after being switched, thereby accelerating a recovery activity of the client business and satisfying a requirement of returning to normal within 50 ms.

In another implementation of the present invention, a field is defined in a reserved field area in a FlexE frame structure to transmit the serial number of the time slot configuration scheme, for example, the SP (slot plan) field shown in Fig. 18. Contents of the SP field may be composed of two parts: a flag and a serial number. The serial number part is used for indicating the serial number of the time slot configuration scheme, and the flag part is used for indicating whether to enable a time slot configuration scheme mode. Specifically, for example, the flag part may be represented by 1 bit, where "1" means not enabling, and "0" means enabling.

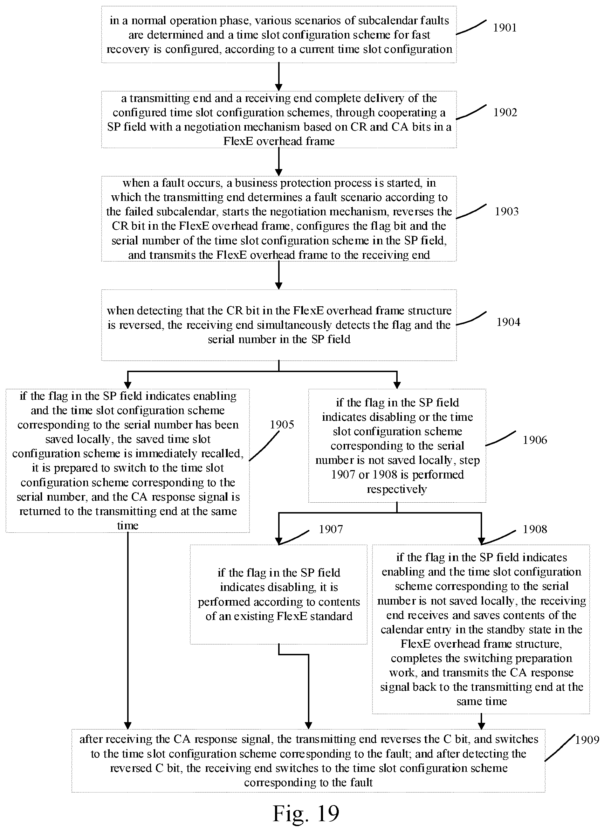

Fig. 19 is a schematic flowchart of a method for switching time slot configuration in a FlexE protocol. As shown in Fig. 19, the method includes the following steps.

In step 1901, in a normal operation phase, various scenarios of subcalendar faults are determined and a time slot configuration scheme for fast recovery is configured, according to a current time slot configuration.

For example, when a group has 4 subcalendars, time slot planning contents of a protection operation when a subcalendar fails is planned. For example, contents of a time slot planning table for a fault of a subcalendar 1 is numbered as a time slot configuration table 1, contents of a time slot planning table for a fault of a subcalendar 2 is numbered as a time slot configuration table 2, contents of a time slot planning table for a fault of a subcalendar 3 is numbered as a time slot configuration table 3, contents of a time slot planning table for a fault of a subcalendar 4 is numbered as a time slot configuration table 4, contents of a time slot planning table for faults of the subcalendars 1 and 2 is numbered as a time slot configuration table 5, contents of a time slot planning table for faults of the subcalendars 1 and s is numbered as a time slot configuration table 6, and so on. Contents of time slot configuration tables for protection operations in all fault scenarios may be planned, or time slot configuration table schemes only for protection operations in single-subcalendar fault scenarios may be planned, that is, only single-subcalendar fault scenarios are supported.

In step 1902, a transmitting end and a receiving end complete delivery of the configured time slot configuration schemes, through cooperating a SP field with a negotiation mechanism based on CR and CA bits in a FlexE overhead frame.

The SP field may be referred to the above-mentioned implementations.

The negotiation mechanism based on the CR and CA bits in the FlexE overhead frame includes the followings.

Usually, one of two entries of Client calendar A or Client calendar B in the FlexE overhead frame is in a working state, and the other is in a standby state. The entry in the working state delivers time slot configuration contents currently in use, and the entry in the standby state is able to deliver new time slot configuration contents. When a configured time slot configuration scheme corresponding to a fault need to be delivered, the transmitting end reverses CR bit information, and the time slot configuration scheme corresponding to the fault is delivered through the calendar entry in the standby state. In a multi-frame cycle, all time slot configuration schemes can be delivered to the receiving end. While the standby calendar delivers the time slot configuration scheme, a corresponding serial number of the time slot configuration scheme is delivered through the SP field. For example, a flag part in the SP field is set to "1", which means that the time slot configuration scheme mode is not enabled, or the flag part in the SP field is set to "0", which means that the time slot configuration scheme mode is enabled. A serial number part delivers serial number of the time slot configuration scheme. At the receiving end, when it is found that the received CR bit is reversed and the flag in the SP field is detected as "0", it indicates that the time slot configuration scheme mode is enabled, and the receiving end saves the contents of the calendar in the standby state in the FlexE overhead frame, and the serial number in the SP field. In one FlexE multi-frame cycle, the transmitting end transmits one time slot configuration scheme through the calendar entry in the standby state. After receiving the one time slot configuration scheme correctly and completely, the receiving end saves the time slot configuration scheme and its serial number, which will be used for quick time slot switching in the future. After saving the one time slot configuration scheme, the receiving end responds to the transmitting end with the CA bit; and the transmitting end resets the CR bit to end the transmission of the one time slot configuration scheme. If there are other time slot configuration schemes need to be transmitted, the transmitting end may reverse the CR bit again and start a new round of time slot configuration scheme delivery until all time slot configuration schemes are delivered.

In step 1903, when a fault occurs, a business protection process is started, in which the transmitting end determines a fault scenario according to the failed subcalendar, starts the negotiation mechanism, reverses the CR bit in the FlexE overhead frame, configures the flag bit and the serial number of the time slot configuration scheme in the SP field, and transmits the FlexE overhead frame to the receiving end.

In normal operations, the transmitting end and the receiving end deliver client businesses according to time slot configuration contents in the calendar in the working state. When the receiving end detects a link fault, it is transmitted back to the transmitting end through a RPF (remote PHY fault) bit in a FlexE frame. The transmitting end determines that the transmitting path is faulty and starts the business protection process. In addition, a case where the transmitting end cannot receive FlexE information from the receiving end and cannot extract information of the RPF bit is also classified as the transmitting path fault, and the business protection process is started.

The calendar entry in the standby state in the FlexE overhead frame may repeatedly transmit the time slot configuration schemes.

In step 1904, when detecting that the CR bit in the FlexE overhead frame structure is reversed, the receiving end simultaneously detects the flag and the serial number in the SP field.

In step 1905, if the flag in the SP field indicates enabling and the time slot configuration scheme corresponding to the serial number has been saved locally, the saved time slot configuration scheme is immediately recalled, it is prepared to switch to the time slot configuration scheme corresponding to the serial number, and the CA response signal is returned to the transmitting end at the same time.

In step 1906, if the flag in the SP field indicates disabling or the time slot configuration scheme corresponding to the serial number is not saved locally, step 1907 or 1908 is performed respectively.

In step 1907, if the flag in the SP field indicates disabling, it is performed according to contents of an existing FlexE standard.

In step 1908, if the flag in the SP field indicates enabling and the time slot configuration scheme corresponding to the serial number is not saved locally, the receiving end receives and saves contents of the calendar entry in the standby state in the FlexE overhead frame structure, completes the switching preparation work, and transmits the CA response signal back to the transmitting end at the same time.

In step 1909, after receiving the CA response signal, the transmitting end reverses the C bit, and switches to the time slot configuration scheme corresponding to the fault; and after detecting the reversed C bit, the receiving end switches to the time slot configuration scheme corresponding to the fault.

In this way, the transmitting end and the receiving end transmits and receives the client business information respectively, according to the time slot configuration after being switched, so as to realize rapid protection of the client businesses.

In another implementation of the present invention, when the fault occurs, in the FlexE overhead frame structure transmitted by the transmitting end to the receiving end, in addition to the CR bit value being set to be reversed, the flag part in the SP field being set to indicate enabling, and the serial number part indicating the number of the time slot configuration scheme corresponding to the fault, the Client calendar field in the standby state in the FlexE overhead frame still delivers the time slot configuration scheme corresponding to the fault. The time slot configuration scheme may be the time slot configuration scheme corresponding to the fault transmitted to the receiving end in advance. In this way, if the receiving end has stored the time slot configuration scheme corresponding to the fault locally, it may directly perform the switching preparation work according to the locally stored time slot configuration scheme; and if the receiving end has not locally saved the time slot configuration scheme corresponding to the fault, it may save the time slot configuration scheme corresponding to the fault transmitted by the Client calendar field in the standby state in the FlexE overhead frame firstly, and then perform the switching preparation work according to the time slot configuration scheme.

In another implementation of the present invention, when the fault occurs, in the FlexE overhead frame structure transmitted by the transmitting end to the receiving end, in addition to the CR bit value being set to be reversed, the flag part in the SP field being set to indicate enabling, and the serial number part indicating the number of the time slot configuration scheme corresponding to the fault, the Client calendar field in the standby state in the FlexE overhead frame still delivers the time slot configuration scheme corresponding to the fault. The time slot configuration scheme may also be the time slot configuration scheme corresponding to the fault updated by the transmitting end. In this way, if the receiving end has stored the time slot configuration scheme corresponding to the fault locally, it may perform the switching preparation work according to the locally stored time slot configuration scheme firstly, and save the updated time slot configuration scheme; and if the receiving end has not locally saved the time slot configuration scheme corresponding to the fault, it may save the time slot configuration scheme corresponding to the fault transmitted by the Client calendar field in the standby state in the FlexE overhead frame firstly, and then perform the switching preparation work according to the time slot configuration scheme. After the switching preparation work is completed and the response is returned to the transmitting end, if it is detected that the transmitting end has reversed the C bit, it may be switched to the updated time slot configuration scheme.

According to the technical solutions provided by the above implementations, when the transmitting end detects a fault occurs in a subcalendar of the FlexE group, the transmitting end and the receiving end do not need to perform the preparation work for time slot switching, but only need to perform the switching operation. The handshake negotiation process is completed within time of 2 FlexE frames, the switching is started at a third FlexE frame, and the client business is restored to normal. The protection switching process requires time of 2 FlexE frames. The receiving end feeding back RPF fault information indicating the subcalendar fault to the transmitting end requires time of one FlexE frame. The entire time of switching for the fault is: 3 * 104.8 us (one frame cycle) = 314.4 us, and the time slot switching time is very short. A fault diagnosis time is generally about 1 ms, which is much longer than the protection time. The total time from interruption to recovery of the client business is about 1 ms. Business interruption time is approximately equal to the fault diagnosis time, which satisfies index requirements of protection and recovery within 50ms.

In the above implementations, as shown in Fig. 18, the defined SP field is located in the reserved field of the FlexE frame overhead, and the delivery of the SP field is completed within one frame cycle (which takes 104.8 us).

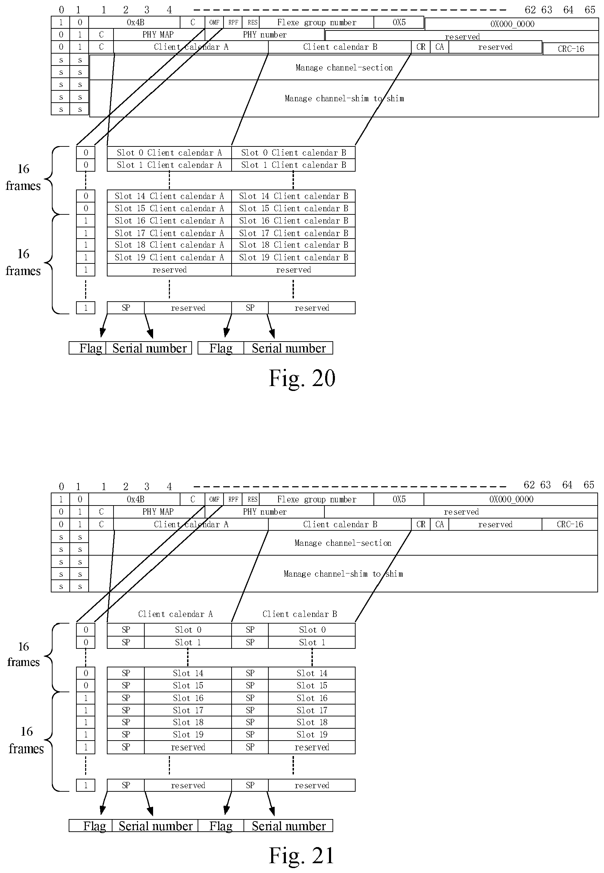

In another implementation of the present invention, since a number of reserved bytes in the FlexE overhead frame is relatively small, in order to save the reserved field, the SP field may also be placed on the reserved field of the calendar in the FlexE multi-frame structure. As shown in Fig. 20, the contents of the SP field are delivered through the reserved field in the calendar.

As shown in Fig. 20, the FlexE multi-frame is composed of 32 frames, and the 32 frames form the multi-frame. One entry of the calendar A and the calendar B is delivered in each frame, and 32 entries are transmitted in the 32 frames. The first 20 entries deliver client names respectively corresponding to 20 time slots in the FlexE protocol, and the last 12 entries are reserved. The extended SP field is delivered through the reserved field in the calendar.

As shown in Fig. 20, the SP field may be delivered through the last entry in the calendar. In order to satisfy calendar table switching requirements, the SP field is defined in both the calendar A and the calendar B. In normal operation, the SP field in the calendar table in the working state indicates the serial number of the time slot configuration scheme of the currently delivered business, and the SP field in the calendar table in the standby state indicates the serial number of the time slot configuration scheme after being switched. The method of using the SP field is exactly the same as that in the above implementations, and the preparation work and the switching action for the time slot configuration switching operation are also exactly the same as that in the above implementations. In the above implementations, the SP field may be delivered within one FlexE frame cycle (which takes 104.8 us), or the SP field may also be transmitted within one FlexE multi-frame cycle (which takes 104.8 us *32=3353.6 us), that is delivery time is increased to 3353.6 us, i.e., 3.3536 ms. The fault delivery only requires the time of one FlexE frame, namely 104.8 us; and the switching operation requires the time of 2 FlexE multi-frames, namely 2*3.3536 ms=6.7072ms. The time taken for time slot switching is within 7 ms, and the time taken for fault diagnosing is about 1ms, so that the time of the business interruption does not exceed 8 ms, which satisfies the requirement of switching within 50 ms.

In another implementation of the present invention, since a number of the reserved bytes in the FlexE overhead frame is relatively small, in order to save the reserved field, the SP field may also be placed on the reserved field of the calendar in the FlexE multi-frame structure, and the contents of the SP field is delivered through the reserved field in the calendar. However, the difference is that, as shown in Fig. 21, the SP field is still delivered through the entries in the calendar table, but each entry in the calendar table is divided into two parts. The first part of the entry delivers the SP field, and the second part of the entry transmits time slot information (which gives serial number information of a currently carried client), so that each entry in the calendar table transmits the same SP field. The transmitting time interval of the SP field is the same as that in the above implementations. This implementation is different from the above implementations only in the delivery position of the SP field, the content of the time slot configuration scheme and the time slot switching process are exactly the same, and the business interruption time is also exactly the same, thereby satisfying the requirement of switching within 50 ms.

In another implementation of the present invention, the time slot configuration scheme corresponding to the at least one fault configured by the transmitting end may be transmitted to the receiving end in the manner of network management protocol configuring. Specifically, when there is no fault, the transmitting end configures the time slot configuration scheme corresponding to the at least one fault, and transmits a first network management message to the receiving end. The first network management message carries the configured time slot configuration scheme corresponding to the at least one fault and its serial number. The receiving end receives the first network management message transmitted by the transmitting end, and saves the time slot configuration scheme corresponding to the at least one fault and its serial number carried in the network management message. When a fault occurs, a second network management message may be transmitted to the receiving end. The second network management message carries a serial number of a time slot configuration scheme corresponding to the fault, and the second network management message is used for notify the receiving end to switch to the time slot configuration scheme corresponding to the fault. The receiving end receives the second network management message transmitted by the transmitting end, obtains the saved time slot configuration scheme corresponding to the fault according to the serial number, completes a switching preparation work, and transmits a switching ready response message to the transmitting end. After receiving the switching ready response message transmitted by the receiving end, the transmitting end switches to the time slot configuration scheme corresponding to the fault, transmits the a switching completion confirmation message to the receiving end, and transmits a business according to the time slot configuration scheme. After receiving the switching completion confirmation message from the transmitting end, the receiving end switches to the time slot configuration scheme corresponding to the fault, and then receives the business according to the time slot configuration scheme.

In another implementation of the present invention, the configured time slot configuration scheme corresponding to the at least one fault may be transmitted to the receiving end in a manner of the management channel in the FlexE frame. Specifically, when there is no fault, the transmitting end encapsulates the configured time slot configuration scheme corresponding to the at least one fault and its serial number into an Ethernet packet, and the Ethernet packet is carried in a management channel field in the FlexE frame and transmitted to the receiving end. The receiving end receives the FlexE frame transmitted by the transmitting end, and stores the time slot configuration scheme corresponding to the at least one fault and its serial number. When a fault occurs, the transmitting end encapsulates a serial number of the time slot configuration scheme corresponding to the fault into an Ethernet packet, and the Ethernet packet is carried in the management channel field in the FlexE frame and transmitted to the receiving end. The receiving end receives the FlexE frame transmitted by the transmitting end, extracts the serial number, and then obtains the saved time slot configuration scheme corresponding to the fault according to the serial number, completes a switching preparation work, and transmits a switching ready response packet to the transmitting end. After receiving the switching ready response packet transmitted by the receiving end, the transmitting end switches to the time slot configuration scheme corresponding to the fault, transmits a switching completion confirmation packet to the receiving end, and transmits a business according to the time slot configuration scheme. After receiving the switching completion confirmation packet from the transmitting end, the receiving end switches to the time slot configuration scheme corresponding to the fault, and then receives the business according to the time slot configuration scheme.

In another implementation of the present invention, when there is no fault, the configured time slot configuration scheme corresponding to the at least one fault may be transmitted by the transmitting end to the receiving end in any one of the following manners: the manner of network management protocol configuring, the manner of the management channel in the FlexE frame, or the manner of the fixed field in the FlexE frame. When a fault occurs, the transmitting end and the receiving end may also negotiate and switch to the time slot configuration scheme corresponding to the fault in any one of the manner of network management protocol configuring, the manner of the management channel in the FlexE frame, or the manner of the fixed field in the FlexE frame.

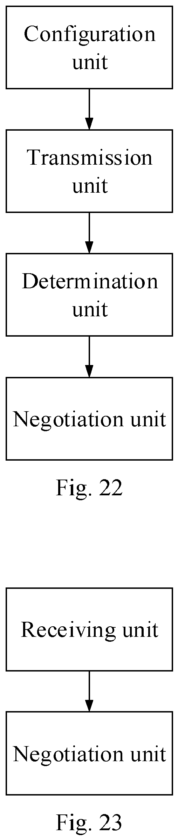

Fig. 22 is a schematic structural diagram of a device for switching time slot configuration in a FlexE protocol. The device is applied to a transmitting end, and as shown in Fig. 22, the device includes the followings.

A configuration unit is configured to configure a time slot configuration scheme corresponding to at least one fault, before a fault occurs in a subcalendar of a FlexE group.

A transmission unit is configured to transmit the configured time slot configuration scheme corresponding to the at least one fault to a receiving end.

A determination unit is configured to determine a corresponding time slot configuration scheme according to the fault, in response to the fault occurring in the subcalendar of the FlexE group.

A negotiation unit, configured to negotiate with the receiving end to switch to the time slot configuration scheme corresponding to the fault.

Each fault corresponds to one time slot configuration scheme, the one time slot configuration scheme corresponds to one serial number, and the one time slot configuration scheme is time slot configuration contents to be re-configured after the fault occurs.

The configured time slot configuration scheme corresponding to the at least one fault is transmitted by the transmission unit to the receiving end in one of the following manners: a manner of network management protocol configuring, a manner of a management channel in a FlexE frame, or a manner of a fixed field in the FlexE frame.

The transmission unit transmitting the configured time slot configuration scheme corresponding to the at least one fault to the receiving end in the manner of the fixed field in the FlexE frame includes: the transmission unit is configured to transmit a first FlexE frame composed of continuous FlexE overhead frames to the receiving end; and a reserved field area in the FlexE overhead frames includes a SP field, where the SP field includes a serial number part and a flag part, the serial number part indicates a serial number of the time slot configuration scheme, and the flag part indicates whether to enable a time slot configuration scheme mode. A value of a CR bit in the FlexE overhead frames is set to be reversed, and the flag part is set to indicate enabling, to notify the receiving end of receiving and saving the time slot configuration scheme corresponding to the fault and the serial number of the time slot configuration scheme. A Client calendar field in a standby state in the FlexE overhead frames delivers the time slot configuration scheme corresponding to the fault.

The first FlexE frame may be a frame composed of 20 consecutive FlexE overhead frames, or may be a FlexE multi-frame composed of 32 consecutive FlexE overhead frames.

One first FlexE frame delivers one time slot configuration scheme, and after transmitting the one first FlexE frame, the transmitting end further includes a receiving unit, configured to, after receiving a CA bit response transmitted by the receiving end, reset the CR bit value.

The negotiation unit is specifically configured to transmit at least one FlexE overhead frame to the receiving end. The value of the CR bit in the FlexE overhead frame is set to be reversed, the serial number part of the SP field indicates the serial number of the time slot configuration scheme corresponding to the fault, and the flag part is set to indicate enabling, to notify the receiving end to switch to the time slot configuration scheme corresponding to the fault. After receiving the CA bit response transmitted by the receiving end, the negotiation unit reverses the C bit, switches to the time slot configuration scheme corresponding to the fault, and transmits a business according to the time slot configuration scheme corresponding to the fault.

The transmission unit transmitting the configured time slot configuration scheme corresponding to the at least one fault to the receiving end in the manner of the fixed field in the FlexE frame includes: the transmission unit is configured to transmit the first FlexE frame composed of continuous FlexE overhead frames to the receiving end. A slot position of the Client calendar field and/or a reserved field of the Client calendar field in the FlexE overhead frames includes the SP field, and the SP field includes the serial number part and the flag part. The flag part is used for indicating whether to enable a time slot configuration scheme mode; and the number part of the SP field in the Client calendar field in a working state is used for indicating a serial number of a currently used time slot configuration scheme, and the serial number part of the SP field in the Client calendar field in the standby state is used for indicating the serial number of the time slot configuration scheme. The value of the CR bit in the FlexE overhead frames is set to be reversed, the flag part of the SP field in the Client calendar field in the working state is set to disable, and the flag part of the SP field in the Client calendar field in the standby state is set to enable, to notify the receiving end of receiving and saving the time slot configuration scheme corresponding to the fault and the serial number of the time slot configuration scheme. The Client calendar field in the standby state in the FlexE overhead frames delivers the time slot configuration scheme corresponding to the fault.

The first FlexE frame may be the frame composed of 20 consecutive FlexE overhead frames, or may be the FlexE multi-frame composed of 32 consecutive FlexE overhead frames.

The slot position of the Client calendar field and/or the reserved field of the Client calendar field in the FlexE overhead frame including the SP field includes: all Client calendar A fields and Client calendar B fields in the FlexE multi-frame include the SP field.

One first FlexE frame delivers one time slot configuration scheme, and after transmitting the one first FlexE frame, the transmitting end further includes a receiving unit, configured to, after receiving the CA bit response transmitted by the receiving end, reset the value of the CR bit.

The negotiation unit is specifically configured to transmit at least one FlexE overhead frame to the receiving end. The value of the CR bit in the FlexE overhead frame is set to be reversed, the serial number part of the SP field of the Client calendar in the working state indicates the serial number of the time slot configuration scheme corresponding to the fault, and the flag part of the SP field of the Client calendar in the working state is set to indicate enabling, to notify the receiving end to switch to the time slot configuration scheme corresponding to the fault.

After receiving the CA bit response transmitted by the receiving end, the negotiation unit reverses the C bit, switches to the time slot configuration scheme corresponding to the fault, and transmits the business according to the time slot configuration scheme corresponding to the fault.

The first FlexE frame may be the frame composed of 20 consecutive FlexE overhead frames, or may be the FlexE multi-frame composed of 32 consecutive FlexE overhead frames.

The Client calendar field in the standby state in the FlexE overhead frame delivers the time slot configuration scheme corresponding to the fault.

The transmission unit transmitting the configured time slot configuration scheme corresponding to the at least one fault to the receiving end in the manner of network management protocol configuring includes: the transmission unit is configured to transmit a first network management message to the receiving end. The first network management message carries the time slot configuration scheme corresponding to the at least one fault configured by the transmitting end and its serial number.

The negotiation unit is specifically configured to transmit a second network management message to the receiving end, the second network management message carries the serial number of the time slot configuration scheme corresponding to the fault, and the second network management message is used for notify the receiving end to switch to the time slot configuration scheme corresponding to the fault. After receiving a switching ready response message transmitted by the receiving end, the negotiation unit switches to the time slot configuration scheme corresponding to the fault, transmits a switching completion confirmation message to the receiving end, and transmits the business according to the time slot configuration scheme.

The transmission unit transmitting the configured time slot configuration scheme corresponding to the at least one fault to the receiving end in the manner of the management channel in the FlexE frame includes: the transmission unit is configured to encapsulate the configured time slot configuration scheme corresponding to the at least one fault and its serial number into an Ethernet packet, carry the Ethernet packet in a management channel field in the FlexE frame, and transmit the Ethernet packet to the receiving end.

The negotiation unit is specifically configured to encapsulate the serial number of the time slot configuration scheme corresponding to the fault into the Ethernet packet, carry the Ethernet packet in the management channel field in the FlexE frame, and transmit the Ethernet packet to the receiving end. After receiving the switching ready response packet transmitted by the receiving end, the negotiation unit switches to the time slot configuration scheme corresponding to the fault, transmits the switching completion confirmation packet to the receiving end, and transmits the business according to the time slot configuration scheme.

Fig. 23 is a schematic structural diagram of a device for switching time slot configuration in a FlexE protocol. The device is applied to a receiving end, and as shown in Fig. 23, the device includes the followings.

A receiving unit is configured to receive a time slot configuration scheme corresponding to at least one fault transmitted by a transmitting end, before a fault occurs in a subcalendar of a FlexE group.

A negotiation unit is configured to negotiate with the transmitting end to switch to a time slot configuration scheme corresponding to the fault, in response to the fault occurring in the subcalendar of the FlexE group.

Each fault corresponds to one time slot configuration scheme, the one time slot configuration scheme corresponds to one serial number, and the one time slot configuration scheme is time slot configuration contents to be re-configured after the fault occurs.

The time slot configuration scheme corresponding to the at least one fault is received by the receiving unit in one of the following manners: a manner of network management protocol configuring, a manner of a management channel in a FlexE frame, or a manner of a fixed field in the FlexE frame.

The receiving unit receiving the time slot configuration scheme corresponding to the at least one fault in the manner of the fixed field in the FlexE frame includes: the receiving unit receives a first FlexE frame composed of continuous FlexE overhead frames transmitted by the transmitting end. A reserved field area in the FlexE overhead frames includes a SP field. The SP field includes a serial number part and a flag part, the serial number part indicates a serial number of the time slot configuration scheme, and the flag part indicates whether to enable a time slot configuration scheme mode. A value of a CR bit in the FlexE overhead frames is set to be reversed, and the flag part is set to indicate enabling, to notify the receiving end of receiving and saving the time slot configuration scheme corresponding to the fault and the serial number of the time slot configuration scheme. A Client calendar field in a standby state in the FlexE overhead frames delivers the time slot configuration scheme corresponding to the fault.

The first FlexE frame may be a frame composed of 20 consecutive FlexE overhead frames, or may be a FlexE multi-frame composed of 32 consecutive FlexE overhead frames.

One first FlexE frame delivers one time slot configuration scheme. The receiving end further includes a saving unit, configured to, after receiving the one first FlexE frame, save the time slot configuration scheme corresponding to the one fault and its serial number, and transmit a CAbit response to the transmitting end.

The negotiation unit is specifically configured to receive at least one FlexE overhead frame transmitted by the transmitting end. The value of the CR bit in the at least one FlexE overhead frame is set to be reversed, the serial number part of the SP field indicates the serial number of the time slot configuration scheme corresponding to the fault, and the flag part is set to indicate enabling, to notify the receiving end to switch to the time slot configuration scheme corresponding to the fault. The negotiation unit obtains the saved time slot configuration scheme corresponding to the fault according to the serial number, completes a switching preparation work, and transmits a CA bit response for switching ready the transmitting end, switches to the time slot configuration scheme corresponding to the fault after detecting that the transmitting end reverses the C bit, and receives a business according to the time slot configuration scheme.

The receiving unit receiving the time slot configuration scheme corresponding to the at least one fault in the manner of the fixed field in the FlexE frame includes: the receiving unit is configured to receive the first FlexE frame composed of continuous FlexE overhead frames transmitted by the transmitting end. A slot position of the Client calendar field and/or a reserved field of the Client calendar field in the FlexE overhead frames includes the SP field, the SP field includes the serial number part and the flag part, and the flag part is used for indicating whether to enable a time slot configuration scheme mode; and the serial number part of the SP field in the Client calendar field in a working state is used for indicating a serial number of a currently used time slot configuration scheme, and the serial number part of the SP field in the Client calendar field in the standby state is used for indicating the serial number of a time slot configuration scheme. The value of the CR bit in the FlexE overhead frames is set to be reversed, the flag part of the SP field in the Client calendar field in the working state is set to disable, and the flag part of the SP field in the Client calendar field in the standby state is set to enable, to notify the receiving end of receiving and saving the time slot configuration scheme corresponding to the fault and the serial number of the time slot configuration scheme. The Client calendar field in the standby state in the FlexE overhead frame delivers the time slot configuration scheme corresponding to the fault.

The first FlexE frame may be the frame composed of 20 consecutive FlexE overhead frames, or may be the FlexE multi-frame composed of 32 consecutive FlexE overhead frames.

The slot position of the Client calendar field and/or the reserved field of the Client calendar field in the FlexE overhead frame including the SP field includes: all Client calendar A fields and Client calendar B fields in the FlexE multi-frame include the SP field.

One first FlexE frame delivers one time slot configuration scheme. The receiving end further includes a saving unit, configured to, after receiving the one first FlexE frame, save the time slot configuration scheme corresponding to the one fault and its serial number, and transmit the CAbit response to the transmitting end.

The negotiation unit is specifically configured to receive at least one FlexE overhead frame transmitted by the transmitting end. The value of the CR bit in the at least one FlexE overhead frame is set to be reversed, the serial number part of the SP field indicates the serial number of the time slot configuration scheme corresponding to the fault, and the flag part is set to indicate enabling, to notify the receiving end to switch to the time slot configuration scheme corresponding to the fault. The negotiation unit obtains the saved time slot configuration scheme corresponding to the fault according to the serial number, completes the switching preparation work, transmits the CA bit response for switching ready to the transmitting end, switches to the time slot configuration scheme corresponding to the fault after detecting that the transmitting end reverses the C bit, and receives the business according to the time slot configuration scheme.

The first FlexE frame may be the frame composed of 20 consecutive FlexE overhead frames, or may be the FlexE multi-frame composed of 32 consecutive FlexE overhead frames.

The Client calendar field in the standby state in the FlexE overhead frame delivers the time slot configuration scheme corresponding to the fault.

The receiving unit receiving the time slot configuration scheme corresponding to the at least one fault in the manner of network management protocol configuring includes: the receiving unit is configured to receive a first network management message transmitted by the transmitting end, and the time slot configuration scheme corresponding to the at least one fault configured by the transmitting end and its serial number are carried by the first network management message.

The negotiation unit is specifically configured to receive a second network management message transmitted by the transmitting end, the second network management message carries the serial number of the time slot configuration scheme corresponding to the fault, and the second network management message is used for notify the receiving end to switch to the time slot configuration scheme corresponding to the fault.

The negotiation unit obtains the saved time slot configuration scheme corresponding to the fault according to the serial number, completes the switching preparation work, transmits the switching ready response message to the transmitting end, and receives the business according to the time slot configuration scheme after receiving a switching completion confirmation message transmitted by the transmitting end.

The receiving unit receiving the time slot configuration scheme corresponding to the at least one fault in the manner of the management channel in the FlexE frame includes: the receiving unit receives the FlexE frame transmitted by the transmitting end, a management channel field in the FlexE frame carries an Ethernet packet, and the Ethernet packet carries the time slot configuration scheme corresponding to the at least one fault and its serial number.

The negotiation unit is specifically configured to receive the FlexE frame transmitted by the transmitting end, the management channel field in the FlexE frame carries the Ethernet packet, and the Ethernet packet carries the serial number of the time slot configuration scheme corresponding to the fault. The negotiation unit obtains the saved time slot configuration scheme corresponding to the fault according to the serial number, completes the switching preparation work, transmits a switching ready response packet to the transmitting end, and receives the business according to the time slot configuration scheme after receiving a switching completion confirmation packet transmitted by the transmitting end.

The embodiments of the present invention further provide a transmitting end, including a memory, a processor, and a computer program stored on the memory and executable by the processor. When the computer program is executed by the processor, any one of the above-mentioned methods executed by the transmitting end for switching time slot configuration in a FlexE protocol is implemented.

The embodiments of the present invention further provide a receiving end, including a memory, a processor, and a computer program stored on the memory and executable by the processor. When the computer program is executed by the processor, any one of the above-mentioned methods executed by the receiving end for switching time slot configuration in a FlexE protocol is implemented.

The embodiments of the present invention further provide a system for switching time slot configuration in FlexE protocol, including any one of the above-mentioned transmitting ends and any one of the above-mentioned receiving ends.

The embodiments of the present invention further provide a computer-readable storage medium storing an information processing program thereon. When the information processing program is executed by a processor, steps of any one of the above-mentioned methods for switching time slot configuration in FlexE protocol are realized.

It should be understood by those having ordinary skill in the art that all or some of the steps in the method disclosed above, and functional modules/units in systems, and devices may be implemented as software, firmware, hardware, or suitable combinations thereof. If implemented as hardware, divisions among the functional modules/units stated above do not necessarily correspond to divisions of physical components. For example, one physical component may have a plurality of functions, or one function or step may be performed through cooperation of several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those having ordinary skill in the art, the term "computer storage media" includes volatile/nonvolatile and removable/non-removable media used in any method or technology for storing information (such as computer-readable instructions, data structures, program modules and other data). The computer storage media include, but are not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a digital versatile disk (DVD) or other optical discs, a magnetic cassette, a magnetic tape, a magnetic disk or other magnetic storage devices, or any other media which can be used to store the desired information and can be accessed by a computer. In addition, it is well known by those having ordinary skill in the art that the communication media generally include computer-readable instructions, data structures, program modules or other data in a modulated data signal, such as a carrier wave or other transmission mechanism, and may include any information delivery media.

### INDUSTRIAL APPLICABILITY

The embodiments of the present invention provide methods and related devices for switching time slot configuration in a FlexE protocol. A preparation part before time slot switching is completed before a fault occurs, and only a switching operation of the time slot switching is completed after the fault occurs, which can greatly reduce time of the time slot switching and satisfy a business protection requirement of 50 ms.

## Claims

1. A method for switching time slot configuration in a Flex Ethernet, FlexE, protocol, comprising:
configuring (1401), by a transmitting end, a time slot configuration scheme corresponding to at least one fault and transmitting the time slot configuration scheme to a receiving end, before a fault occurs in a subcalendar of a FlexE group;
determining (1402), by the transmitting end, a time slot configuration scheme corresponding to the fault according to the fault, in response to the fault occurring in the subcalendar of the FlexE group; and
negotiating (1403), by the transmitting end, with the receiving end to switch to the time slot configuration scheme corresponding to the fault, wherein
the time slot configuration scheme comprises time slot configuration schemes for protection operations in all or multiple fault scenarios, or time slot configuration schemes for protection operations in single-subcalendar fault scenarios, and
each fault corresponds to one time slot configuration scheme corresponding to one serial number, and the one time slot configuration scheme is time slot configuration contents to be reconfigured after the fault occurs.

2. The method according to claim 1, wherein the time slot configuration scheme corresponding to the at least one fault configured by the transmitting end is transmitted to the receiving end in a manner of a fixed field in the FlexE frame; and
transmitting the configured time slot configuration scheme corresponding to the at least one fault to the receiving end in the manner of the fixed field in the FlexE frame comprises:
transmitting, by the transmitting end, a first FlexE frame composed of continuous FlexE overhead frames to the receiving end; and
a reserved field area in the FlexE overhead frames comprising a SP field, wherein the SP field comprises a serial number part and a flag part, the serial number part indicates a serial number of the time slot configuration scheme, and the flag part indicates whether to enable a time slot configuration scheme mode;
wherein a value of a CR bit in the FlexE overhead frames is set to be reversed, and the flag part is set to indicate enabling, to notify the receiving end of receiving and saving the time slot configuration scheme corresponding to the fault and a serial number of the time slot configuration scheme; and
a Client calendar field in a standby state in the FlexE overhead frames delivers the time slot configuration scheme corresponding to the fault.

3. The method according to claim 2, wherein,
one first FlexE frame delivers one time slot configuration scheme, and after transmitting the one first FlexE frame, the transmitting end resets the value of the CR bit after receiving a CA bit response transmitted by the receiving end; and
negotiating, by the transmitting end, with the receiving end to switch to the time slot configuration scheme corresponding to the fault comprises:
transmitting, by the transmitting end, at least one FlexE overhead frame to the receiving end;
wherein a value of a CR bit in the at least one FlexE overhead frame is set to be reversed, a serial number part of a SP field indicates a serial number of the time slot configuration scheme corresponding to the fault, and a flag part is set to indicate enabling, to notify the receiving end to switch to the time slot configuration scheme corresponding to the fault; and
reversing, by the transmitting end, a C bit, switching to the time slot configuration scheme corresponding to the fault, and transmitting business data according to the time slot configuration scheme corresponding to the fault, after receiving a CA bit response transmitted by the receiving end.

4. The method according to claim 1, wherein the time slot configuration scheme corresponding to the at least one fault configured by the transmitting end is transmitted to the receiving end in a manner of a fixed field in the FlexE frame; and
transmitting the configured time slot configuration scheme corresponding to the at least one fault to the receiving end in the manner of the fixed field in the FlexE frame comprises:
transmitting, by the transmitting end, a first FlexE frame composed of continuous FlexE overhead frames to the receiving end;
a slot position of a Client calendar field and/or a reserved field of the Client calendar field in the FlexE overhead frames comprises a SP field, and the SP field comprises a serial number part and a flag part, wherein the flag part is used for indicating whether to enable a time slot configuration scheme mode; and
the serial number part of the SP field in the Client calendar field in a working state being used for indicating a serial number of a currently used time slot configuration scheme, and the serial number part of the SP field in the Client calendar field in a standby state being used for indicating a serial number of a time slot configuration scheme;
wherein a value of a CR bit in the FlexE overhead frames is set to be reversed, the flag part of the SP field in the Client calendar field in the working state is set to disable, and the flag part of the SP field in the Client calendar field in the standby state is set to enable, to notify the receiving end of receiving and saving the time slot configuration scheme corresponding to the fault and a serial number of the time slot configuration scheme; and
the Client calendar field in the standby state in the FlexE overhead frames delivers the time slot configuration scheme corresponding to the fault.

5. The method according to claim 4, wherein,
the first FlexE frame is a FlexE multi-frame composed of 32 consecutive FlexE overhead frames; and
the slot position of the Client calendar field and/or the reserved field of the Client calendar field in the FlexE overhead frames comprising the SP field comprises: all Client calendar A fields and Client calendar B fields in the FlexE multi-frame comprising the SP field.

6. The method according to claim 4, wherein,
one first FlexE frame delivers one time slot configuration scheme, and after transmitting the one first FlexE frame, the transmitting end resets the value of the CR bit after receiving a CA bit response transmitted by the receiving end; and
negotiating, by the transmitting end, with the receiving end to switch to the time slot configuration scheme corresponding to the fault comprises:
transmitting, by the transmitting end, at least one FlexE overhead frame to the receiving end;
wherein in the at least one FlexE overhead frame, a value of a CR bit is set to be reversed, a serial number part of a SP field of a Client calendar in a working state indicates a serial number of the time slot configuration scheme corresponding to the fault, and a flag part of the SP field of the Client calendar in the working state is set to indicate enabling, to notify the receiving end to switch to the time slot configuration scheme corresponding to the fault; and
reversing, by the transmitting end, a C bit, switching to the time slot configuration scheme corresponding to the fault, and transmitting business data according to the time slot configuration scheme corresponding to the fault, after receiving a CA bit response transmitted by the receiving end.

7. The method according to claim 1, wherein the time slot configuration scheme corresponding to the at least one fault configured by the transmitting end is transmitted to the receiving end in a manner of network management protocol configuring; and
transmitting the configured time slot configuration scheme corresponding to the at least one fault to the receiving end in the manner of network management protocol configuring comprises:
transmitting, by the transmitting end, a first network management message to the receiving end, wherein the first network management message carries the time slot configuration scheme corresponding to the at least one fault configured by the transmitting end and its serial number.

8. The method according to claim 7, wherein negotiating, by the transmitting end, with the receiving end to switch to the time slot configuration scheme corresponding to the fault comprises:
transmitting, by the transmitting end, a second network management message to the receiving end, the second network management message carrying a serial number of the time slot configuration scheme corresponding to the fault, and the second network management message being used for notify the receiving end to switch to the time slot configuration scheme corresponding to the fault; and
switching, by the transmitting end, to the time slot configuration scheme corresponding to the fault, transmitting a switching completion confirmation message to the receiving end, and transmitting business data according to the time slot configuration scheme, after receiving a switching ready response message transmitted by the receiving end.

9. The method according to claim 1, wherein the time slot configuration scheme corresponding to the at least one fault configured by the transmitting end is transmitted to the receiving end in a manner of a management channel in a FlexE frame; and
transmitting the configured time slot configuration scheme corresponding to the at least one fault to the receiving end in the manner of the management channel in the FlexE frame comprises:
encapsulating, by the transmitting end, the configured time slot configuration scheme corresponding to the at least one fault and its serial number into an Ethernet packet, carrying the Ethernet packet in the management channel field in the FlexE frame, and transmitting the Ethernet packet to the receiving end.

10. The method according to claim 1, wherein negotiating with the receiving end to switch to the time slot configuration scheme corresponding to the fault comprises:
encapsulating, by the transmitting end, a serial number of the time slot configuration scheme corresponding to the fault into an Ethernet packet, and carrying the Ethernet packet in a management channel field in a FlexE frame, and transmitting the Ethernet packet to the receiving end; and
switching, by the transmitting end, to the time slot configuration scheme corresponding to the fault, transmitting a switching completion confirmation packet to the receiving end, and transmitting business data according to the time slot configuration scheme, after receiving a switching ready response packet transmitted by the receiving end.

11. A method for switching time slot configuration in a Flex Ethernet, FlexE, protocol, comprising:
receiving (1501), by a receiving end, a time slot configuration scheme corresponding to at least one fault transmitted by a transmitting end, before a fault occurs in a subcalendar of a FlexE group; and
negotiating (1502), by the receiving end, with the transmitting end to switch to a time slot configuration scheme corresponding to the fault, in response to the fault occurring in the subcalendar of the FlexE group, wherein
the time slot configuration scheme comprises time slot configuration schemes for protection operations in all or multiple fault scenarios, or time slot configuration schemes for protection operations in single-subcalendar fault scenarios, and
each fault corresponds to one time slot configuration scheme corresponding to one serial number, and the one time slot configuration scheme is time slot configuration contents to be reconfigured after the fault occurs.

12. The method according to claim 11, wherein the time slot configuration scheme corresponding to the at least one fault is received in one of the following manners:
a manner of network management protocol configuring, a manner of a management channel in a FlexE frame, or a manner of a fixed field in the FlexE frame.

13. The method according to claim 11, wherein negotiating, by the receiving end, with the transmitting end to switch to the time slot configuration scheme corresponding to the fault, comprises:
receiving, by the receiving end, a FlexE frame transmitted by the transmitting end, a management channel field in the FlexE frame carrying an Ethernet packet, and the Ethernet packet carrying a serial number of the time slot configuration scheme corresponding to the fault; and
obtaining, by the receiving end, the saved time slot configuration scheme corresponding to the fault according to the serial number, completing a switching preparation work, and transmitting a switching ready response packet to the transmitting end; and receiving business data according to the time slot configuration scheme, after receiving a switching completion confirmation packet transmitted by the transmitting end.

## Patentansprüche

1. Verfahren zum Schalten einer Zeitfenster-Konfiguration in einem Flex-Ethernet-, FlexE-, Protokoll, umfassend:
Konfigurieren (1401), durch ein Übertragungsende, eines Zeitfenster-Konfigurationsschemas, das mindestens einem Fehler entspricht, und Übertragen des Zeitfenster-Konfigurationsschemas an ein Empfangsende, bevor ein Fehler in einem Teilkalender einer FlexE-Gruppe auftritt;
Bestimmen (1402), durch das Übertragungsende, eines Zeitfenster-Konfigurationsschemas, das dem Fehler entspricht, gemäß dem Fehler als Reaktion darauf, dass der Fehler in dem Teilkalender der FlexE-Gruppe auftritt; und
Verhandeln (1403), durch das Übertragungsende, mit dem Empfangsende, um zu dem Zeitfenster-Konfigurationsschema zu schalten, das dem Fehler entspricht, wobei
das Zeitfenster-Konfigurationsschema Zeitfenster-Konfigurationsschemata für Schutzoperationen in allen oder mehreren Fehlerszenarien oder Zeitfenster-Konfigurationsschemata für Schutzoperationen in Einzel-Subkalender-Fehlerszenarien umfasst, und
jeder Fehler einem Zeitfenster-Konfigurationsschema entspricht, das einer Seriennummer entspricht, und das eine Zeitfenster-Konfigurationsschema ein Zeitfenster-Konfigurationsinhalt ist, der neu zu konfigurieren ist, nachdem der Fehler auftritt.

2. Verfahren nach Anspruch 1, wobei das Zeitfenster-Konfigurationsschema, das dem mindestens einen Fehler entspricht, der durch das Übertragungsende konfiguriert ist, auf eine Weise eines festen Feldes in dem FlexE-Rahmen an das Empfangsende übertragen wird; und
Übertragen des konfigurierten Zeitfenster-Konfigurationsschemas, das dem mindestens einen Fehler entspricht, auf die Weise des festen Feldes in dem FlexE-Rahmen an das Empfangsende umfasst:
Übertragen, durch das Übertragungsende, eines ersten FlexE-Rahmens, der aus kontinuierlichen FlexE-Overhead-Rahmen besteht, an das Empfangsende; und
einen reservierten Feldbereich in den FlexE-Overhead-Rahmen, der ein SP-Feld umfasst, wobei das SP-Feld einen Seriennummernteil und einen Flag-Teil umfasst, der Seriennummernteil eine Seriennummer des Zeitfenster-Konfigurationsschemas angibt und der Flag-Teil angibt, ob ein Zeitfenster-Konfigurationsschema-Modus aktiviert werden soll;
wobei ein Wert eines CR-Bits in den FlexE-Overhead-Rahmen so eingestellt ist, dass er umgekehrt wird, und der Flag-Teil so eingestellt ist, dass er das Aktivieren angibt, um das Empfangsende über das Empfangen und Speichern des Zeitfenster-Konfigurationsschemas, das dem Fehler entspricht, und einer Seriennummer des Zeitfenster-Konfigurationsschemas zu benachrichtigen; und
ein Client-Kalenderfeld in einem Bereitschaftszustand in den FlexE-Overhead-Rahmen das Zeitfenster-Konfigurationsschema, das dem Fehler entspricht, liefert.

3. Verfahren nach Anspruch 2, wobei
ein erster FlexE-Rahmen ein Zeitfenster-Konfigurationsschema liefert und nach dem Übertragen des einen ersten FlexE-Rahmens das Übertragungsende den Wert des CR-Bits nach dem Empfangen einer CA-Bit-Antwort, die durch das Empfangsende übertragen wird, zurücksetzt; und
Verhandeln, durch das Übertragungsende, mit dem Empfangsende, um zu dem Zeitfenster-Konfigurationsschema zu schalten, das dem Fehler entspricht, umfasst:
Übertragen, durch das Übertragungsende, mindestens eines FlexE-Overhead-Rahmens an das Empfangsende;
wobei ein Wert eines CR-Bits in dem mindestens einen FlexE-Overhead-Rahmen so eingestellt ist, dass er umgekehrt wird, ein Seriennummernteil eines SP-Feldes eine Seriennummer des Zeitfenster-Konfigurationsschemas angibt, das dem Fehler entspricht, und ein Flag-Teil so eingestellt ist, dass er das Aktivieren angibt, um das Empfangsende zu benachrichtigen, zu dem Zeitfenster-Konfigurationsschema zu schalten, das dem Fehler entspricht; und
Umkehren, durch das Übertragungsende, eines C-Bits, Schalten zu dem Zeitfenster-Konfigurationsschema, das dem Fehler entspricht, und Übertragen von Geschäftsdaten gemäß dem Zeitfenster-Konfigurationsschema, das dem Fehler entspricht, nach dem Empfangen einer CA-Bit-Antwort, die durch das Empfangsende übertragen wird.

4. Verfahren nach Anspruch 1, wobei das Zeitfenster-Konfigurationsschema, das dem mindestens einen Fehler entspricht, der durch das Übertragungsende konfiguriert ist, auf eine Weise eines festen Feldes in dem FlexE-Rahmen an das Empfangsende übertragen wird; und
Übertragen des konfigurierten Zeitfenster-Konfigurationsschemas, das dem mindestens einen Fehler entspricht, auf die Weise des festen Feldes in dem FlexE-Rahmen an das Empfangsende umfasst:
Übertragen, durch das Übertragungsende, eines ersten FlexE-Rahmens, der aus kontinuierlichen FlexE-Overhead-Rahmen besteht, an das Empfangsende;
eine Fensterposition eines Client-Kalenderfeldes und/oder eines reservierten Feldes des Client-Kalenderfeldes in den FlexE-Overhead-Rahmen ein SP-Feld umfasst und das SP-Feld einen Seriennummernteil und einen Flag-Teil umfasst, wobei der Flag-Teil verwendet wird, um anzugeben, ob ein Zeitfenster-Konfigurationsschema-Modus aktiviert werden soll; und
der Seriennummernteil des SP-Feldes in dem Client-Kalenderfeld in einem Arbeitszustand verwendet wird, um eine Seriennummer eines aktuell verwendeten Zeitfenster-Konfigurationsschemas anzugeben, und der Seriennummernteil des SP-Feldes in dem Client-Kalenderfeld in einem Bereitschaftszustand verwendet wird, um eine Seriennummer eines Zeitfenster-Konfigurationsschemas anzugeben;
wobei ein Wert eines CR-Bits in den FlexE-Overhead-Rahmen so eingestellt ist, dass er umgekehrt wird, der Flag-Teil des SP-Feldes in dem Client-Kalenderfeld in dem Arbeitszustand so eingestellt ist, dass er deaktiviert wird, und der Flag-Teil des SP-Feldes in dem Client-Kalenderfeld in dem Bereitschaftszustand so eingestellt ist, dass er aktiviert wird, um das Empfangsende über das Empfangen und Speichern des Zeitfenster-Konfigurationsschemas, das dem Fehler entspricht, und einer Seriennummer des Zeitfenster-Konfigurationsschemas zu benachrichtigen; und
das Client-Kalenderfeld in dem Bereitschaftszustand in den FlexE-Overhead-Rahmen das Zeitfenster-Konfigurationsschema, das dem Fehler entspricht, liefert.

5. Verfahren nach Anspruch 4, wobei
der erste FlexE-Rahmen ein FlexE-Mehrfachrahmen ist, der aus 32 aufeinanderfolgenden FlexE-Overhead-Rahmen besteht; und
die Fensterposition des Client-Kalenderfeldes und/oder des reservierten Feldes des Client-Kalenderfeldes in den FlexE-Overhead-Rahmen, die das SP-Feld umfassen, umfasst: alle Client-Kalender-A-Felder und Client-Kalender-B-Felder in dem FlexE-Mehrfachrahmen, der das SP-Feld umfasst.

6. Verfahren nach Anspruch 4, wobei
ein erster FlexE-Rahmen ein Zeitfenster-Konfigurationsschema liefert und nach dem Übertragen des einen ersten FlexE-Rahmens das Übertragungsende den Wert des CR-Bits nach dem Empfangen einer CA-Bit-Antwort, die durch das Empfangsende übertragen wird, zurücksetzt; und
Verhandeln, durch das Übertragungsende, mit dem Empfangsende, um zu dem Zeitfenster-Konfigurationsschema zu schalten, das dem Fehler entspricht, umfasst:
Übertragen, durch das Übertragungsende, mindestens eines FlexE-Overhead-Rahmens an das Empfangsende;
wobei in dem mindestens einen FlexE-Overhead-Rahmen ein Wert eines CR-Bits so eingestellt ist, dass er umgekehrt wird, ein Seriennummernteil eines SP-Feldes eines Client-Kalenders in einem Arbeitszustand eine Seriennummer des Zeitfenster-Konfigurationsschemas angibt, das dem Fehler entspricht, und ein Flag-Teil des SP-Feldes des Client-Kalenders in dem Arbeitszustand so eingestellt ist, dass er das Aktivieren angibt, um das Empfangsende zu benachrichtigen, zu dem Zeitfenster-Konfigurationsschema zu schalten, das dem Fehler entspricht; und
Umkehren, durch das Übertragungsende, eines C-Bits, Schalten zu dem Zeitfenster-Konfigurationsschema, das dem Fehler entspricht, und Übertragen von Geschäftsdaten gemäß dem Zeitfenster-Konfigurationsschema, das dem Fehler entspricht, nach dem Empfangen einer CA-Bit-Antwort, die durch das Empfangsende übertragen wird.

7. Verfahren nach Anspruch 1, wobei das Zeitfenster-Konfigurationsschema, das dem mindestens einen Fehler entspricht, der durch das Übertragungsende konfiguriert ist, auf eine Weise des Konfigurierens eines Netzwerkverwaltungsprotokolls an das Empfangsende übertragen wird; und
Übertragen des konfigurierten Zeitfenster-Konfigurationsschemas, das dem mindestens einen Fehler entspricht, auf die Weise des Konfigurierens eines Netzwerkverwaltungsprotokolls an das Empfangsende umfasst:
Übertragen, durch das Übertragungsende, einer ersten Netzwerkverwaltungsnachricht an das Empfangsende, wobei die erste Netzwerkverwaltungsnachricht das Zeitfenster-Konfigurationsschema, das dem mindestens einen Fehler entspricht, der durch das Übertragungsende konfiguriert ist, und seine Seriennummer führt.

8. Verfahren nach Anspruch 7, wobei Verhandeln, durch das Übertragungsende, mit dem Empfangsende, um zu dem Zeitfenster-Konfigurationsschema zu schalten, das dem Fehler entspricht, umfasst:
Übertragen, durch das Übertragungsende, einer zweiten Netzwerkverwaltungsnachricht an das Empfangsende, wobei die zweite Netzwerkverwaltungsnachricht eine Seriennummer des Zeitfenster-Konfigurationsschemas führt, das dem Fehler entspricht, und die zweite Netzwerkverwaltungsnachricht verwendet wird, um das Empfangsende zu benachrichtigen, zu dem Zeitfenster-Konfigurationsschema zu schalten, das dem Fehler entspricht; und
Schalten, durch das Übertragungsende, zu dem Zeitfenster-Konfigurationsschema, das dem Fehler entspricht, Übertragen einer Schaltabschluss-Bestätigungsnachricht an das Empfangsende und Übertragen von Geschäftsdaten gemäß dem Zeitfenster-Konfigurationsschema nach dem Empfangen einer Schaltbereitschafts-Antwortnachricht, die durch das Empfangsende übertragen wird.

9. Verfahren nach Anspruch 1, wobei das Zeitfenster-Konfigurationsschema, das dem mindestens einen Fehler entspricht, der durch das Übertragungsende konfiguriert ist, auf eine Weise eines Verwaltungskanals in einem FlexE-Rahmen an das Empfangsende übertragen wird; und
Übertragen des konfigurierten Zeitfenster-Konfigurationsschemas, das dem mindestens einen Fehler entspricht, auf die Weise des Verwaltungskanals in dem FlexE-Rahmen an das Empfangsende umfasst:
Einkapseln, durch das Übertragungsende, des konfigurierten Zeitfenster-Konfigurationsschemas, das dem mindestens einen Fehler und seiner Seriennummer entspricht, in ein Ethernet-Paket, Führen des Ethernet-Pakets in dem Verwaltungskanalfeld in dem FlexE-Rahmen und Übertragen des Ethernet-Pakets an das Empfangsende.

10. Verfahren nach Anspruch 1, wobei Verhandeln mit dem Empfangsende, um zu dem Zeitfenster-Konfigurationsschema zu schalten, das dem Fehler entspricht, umfasst:
Einkapseln, durch das Übertragungsende, einer Seriennummer des Zeitfenster-Konfigurationsschemas, das dem Fehler entspricht, in ein Ethernet-Paket und Führen des Ethernet-Pakets in einem Verwaltungskanalfeld in einem FlexE-Rahmen und Übertragen des Ethernet-Pakets an das Empfangsende; und
Schalten, durch das Übertragungsende, zu dem Zeitfenster-Konfigurationsschema, das dem Fehler entspricht, Übertragen eines Schaltabschluss-Bestätigungspakets an das Empfangsende und Übertragen von Geschäftsdaten gemäß dem Zeitfenster-Konfigurationsschema nach dem Empfangen eines Schaltbereitschafts-Antwortpakets, das durch das Empfangsende übertragen wird.

11. Verfahren zum Schalten einer Zeitfenster-Konfiguration in einem Flex-Ethernet-, FlexE-, Protokoll, umfassend:
Empfangen (1501), durch ein Empfangsende, eines Zeitfenster-Konfigurationsschemas, das mindestens einem Fehler entspricht, der durch ein Übertragungsende übertragen wird, bevor ein Fehler in einem Teilkalender einer FlexE-Gruppe auftritt; und
Verhandeln (1502), durch das Empfangsende, mit dem Übertragungsende, um zu einem Zeitfenster-Konfigurationsschema zu schalten, das dem Fehler entspricht, als Reaktion darauf, dass der Fehler in dem Teilkalender der FlexE-Gruppe auftritt, wobei
das Zeitfenster-Konfigurationsschema Zeitfenster-Konfigurationsschemata für Schutzoperationen in allen oder mehreren Fehlerszenarien oder Zeitfenster-Konfigurationsschemata für Schutzoperationen in Einzel-Subkalender-Fehlerszenarien umfasst, und
jeder Fehler einem Zeitfenster-Konfigurationsschema entspricht, das einer Seriennummer entspricht, und das eine Zeitfenster-Konfigurationsschema ein Zeitfenster-Konfigurationsinhalt ist, der neu zu konfigurieren ist, nachdem der Fehler auftritt.

12. Verfahren nach Anspruch 11, wobei das Zeitfenster-Konfigurationsschema, das dem mindestens einen Fehler entspricht, auf eine der folgenden Weisen empfangen wird:
eine Weise des Konfigurierens eines Netzwerkverwaltungsprotokolls, eine Weise eines Verwaltungskanals in einem FlexE-Rahmen oder eine Weise eines festen Feldes in dem FlexE-Rahmen.

13. Verfahren nach Anspruch 11, wobei Verhandeln, durch das Empfangsende, mit dem Übertragungsende, um zu dem Zeitfenster-Konfigurationsschema zu schalten, das dem Fehler entspricht, umfasst:
Empfangen, durch das Empfangsende, eines durch das Übertragungsende übertragenen FlexE-Rahmens, wobei ein Verwaltungskanalfeld in dem FlexE-Rahmen ein Ethernet-Paket führt und das Ethernet-Paket eine Seriennummer des Zeitfenster-Konfigurationsschemas führt, das dem Fehler entspricht; und
Erhalten, durch das Empfangsende, des gespeicherten Zeitfenster-Konfigurationsschemas, das dem Fehler entspricht, gemäß der Seriennummer, Abschließen einer Schaltvorbereitungsarbeit und Übertragen eines Schaltbereitschafts-Antwortpakets an das Übertragungsende; und Empfangen von Geschäftsdaten gemäß dem Zeitfenster-Konfigurationsschema nach dem Empfangen eines Schaltabschluss-Bestätigungspakets, das durch das Übertragungsende übertragen wird.

## Revendications

1. Procédé pour commuter une configuration d'intervalle de temps dans un protocole Flex Ethernet, FlexE, comprenant les étapes consistant à :
configurer (1401), par une extrémité de transmission, un schéma de configuration d'intervalle de temps correspondant à au moins un défaut et envoyer le schéma de configuration d'intervalle de temps à une extrémité de réception, avant qu'un défaut ne se produise dans un sous-calendrier d'un groupe FlexE ;
déterminer (1402), par l'extrémité de transmission, un schéma de configuration d'intervalle de temps correspondant au défaut en fonction du défaut, en réponse au fait que le défaut se produit dans le sous-calendrier du groupe FlexE ; et
négocier (1403), par l'extrémité de transmission, avec l'extrémité de réception pour commuter vers le schéma de configuration d'intervalle de temps correspondant au défaut, dans lequel
le schéma de configuration d'intervalle de temps comprend des schémas de configuration d'intervalle de temps pour des opérations de protection dans tous les scénarios de défaut ou dans de multiples scénarios de défaut, ou des schémas de configuration d'intervalle de temps pour des opérations de protection dans des scénarios de défaut à un seul sous-calendrier, et
chaque défaut correspond à un schéma de configuration d'intervalle de temps correspondant à un numéro de série, et le schéma de configuration d'intervalle de temps est un contenu de configuration d'intervalle de temps à reconfigurer après que le défaut se produit.

2. Procédé selon la revendication 1, dans lequel le schéma de configuration d'intervalle de temps correspondant à l'au moins un défaut configuré par l'extrémité de transmission est envoyé à l'extrémité de réception à la manière d'un champ fixe dans la trame FlexE ; et
l'étape consistant à envoyer le schéma de configuration d'intervalle de temps configuré correspondant à l'au moins un défaut à l'extrémité de réception à la manière du champ fixe dans la trame FlexE comprend les étapes consistant à :
envoyer, par l'extrémité de transmission, une première trame FlexE composée de trames de surdébit FlexE continues à l'extrémité de réception ; et
une zone de champ réservée dans les trames de surdébit FlexE comprenant un champ SP, dans lequel le champ SP comprend une partie de numéro de série et une partie de drapeau, la partie de numéro de série indique un numéro de série du schéma de configuration d'intervalle de temps, et la partie de drapeau indique s'il faut activer un mode de schéma de configuration d'intervalle de temps ;
dans lequel une valeur d'un bit CR dans les trames de surdébit FlexE est réglée pour être inversée, et la partie de drapeau est réglée pour indiquer l'activation, pour notifier à l'extrémité de réception de recevoir et de sauvegarder le schéma de configuration d'intervalle de temps correspondant au défaut et un numéro de série du schéma de configuration d'intervalle de temps ; et
un champ de calendrier Client dans un état de veille dans les trames de surdébit FlexE délivre le schéma de configuration d'intervalle de temps correspondant au défaut.

3. Procédé selon la revendication 2, dans lequel
une première trame FlexE délivre un schéma de configuration d'intervalle de temps, et après avoir envoyé la première trame FlexE, l'extrémité de transmission réinitialise la valeur du bit CR après avoir reçu une réponse de bit CA envoyée par l'extrémité de réception ; et
négocier, par l'extrémité de transmission, avec l'extrémité de réception pour commuter vers le schéma de configuration d'intervalle de temps correspondant au défaut comprend les étapes consistant à :
envoyer, par l'extrémité de transmission, au moins une trame de surdébit FlexE à l'extrémité de réception ;
dans lequel une valeur d'un bit CR dans l'au moins une trame de surdébit FlexE est réglée pour être inversée, une partie de numéro de série d'un champ SP indique un numéro de série du schéma de configuration d'intervalle de temps correspondant au défaut, et une partie de drapeau est réglée pour indiquer l'activation, pour notifier à l'extrémité de réception de commuter vers le schéma de configuration d'intervalle de temps correspondant au défaut ; et
inverser, par l'extrémité de transmission, un bit C, commuter vers le schéma de configuration d'intervalle de temps correspondant au défaut, et envoyer des données commerciales en fonction du schéma de configuration d'intervalle de temps correspondant au défaut, après avoir reçu une réponse de bit CA envoyée par l'extrémité de réception.

4. Procédé selon la revendication 1, dans lequel le schéma de configuration d'intervalle de temps correspondant à l'au moins un défaut configuré par l'extrémité de transmission est envoyé à l'extrémité de réception à la manière d'un champ fixe dans la trame FlexE ; et
envoyer le schéma de configuration d'intervalle de temps configuré correspondant à l'au moins un défaut à l'extrémité de réception à la manière du champ fixe dans la trame FlexE comprend les étapes consistant à :
envoyer, par l'extrémité de transmission, une première trame FlexE composée de trames de surdébit FlexE continues à l'extrémité de réception ;
une position d'intervalle d'un champ de calendrier Client et/ou d'un champ réservé du champ de calendrier Client dans les trames de surdébit FlexE comprend un champ SP, et le champ SP comprend une partie de numéro de série et une partie de drapeau, dans lequel la partie de drapeau est utilisée pour indiquer s'il faut activer un mode de schéma de configuration d'intervalle de temps ; et
la partie de numéro de série du champ SP dans le champ de calendrier Client dans un état de travail étant utilisée pour indiquer un numéro de série d'un schéma de configuration d'intervalle de temps actuellement utilisé, et la partie de numéro de série du champ SP dans le champ de calendrier Client dans un état de veille étant utilisée pour indiquer un numéro de série d'un schéma de configuration d'intervalle de temps ;
dans lequel une valeur d'un bit CR dans les trames de surdébit FlexE est réglée pour être inversée, la partie de drapeau du champ SP dans le champ de calendrier Client dans l'état de travail est réglée pour être désactivée, et la partie de drapeau du champ SP dans le champ de calendrier Client dans l'état de veille est réglée pour être activée, pour notifier à l'extrémité de réception de recevoir et de sauvegarder le schéma de configuration d'intervalle de temps correspondant au défaut et un numéro de série du schéma de configuration d'intervalle de temps ; et
le champ de calendrier Client dans l'état d'attente dans les trames de surdébit FlexE délivre le schéma de configuration d'intervalle de temps correspondant au défaut.

5. Procédé selon la revendication 4, dans lequel
la première trame FlexE est une multi-trame FlexE composée de 32 trames de surdébit FlexE consécutives ; et
la position d'intervalle du champ de calendrier Client et/ou du champ réservé du champ de calendrier Client dans les trames de surdébit FlexE comprenant le champ SP comprend : tous les champs A de calendrier Client et les champs B de calendrier Client dans la multi-trame FlexE comprenant le champ SP.

6. Procédé selon la revendication 4, dans lequel
une première trame FlexE délivre un schéma de configuration d'intervalle de temps, et après avoir envoyé la première trame FlexE, l'extrémité de transmission réinitialise la valeur du bit CR après avoir reçu une réponse de bit CA envoyée par l'extrémité de réception ; et
négocier, par l'extrémité de transmission, avec l'extrémité de réception pour commuter vers le schéma de configuration d'intervalle de temps correspondant au défaut comprend les étapes consistant à :
envoyer, par l'extrémité de transmission, au moins une trame de surdébit FlexE à l'extrémité de réception ;
dans lequel, dans l'au moins une trame de surdébit FlexE, une valeur d'un bit CR est réglée pour être inversée, une partie de numéro de série d'un champ SP d'un calendrier Client dans un état de travail indique un numéro de série du schéma de configuration d'intervalle de temps correspondant au défaut, et une partie de drapeau du champ SP du calendrier Client dans l'état de travail est réglée pour indiquer l'activation, pour notifier à l'extrémité de réception de commuter vers le schéma de configuration d'intervalle de temps correspondant au défaut ; et
inverser, par l'extrémité de transmission, un bit C, commuter vers le schéma de configuration d'intervalle de temps correspondant au défaut, et envoyer des données commerciales en fonction du schéma de configuration d'intervalle de temps correspondant au défaut, après avoir reçu une réponse de bit CA envoyée par l'extrémité de réception.

7. Procédé selon la revendication 1, dans lequel le schéma de configuration d'intervalle de temps correspondant à l'au moins un défaut configuré par l'extrémité de transmission est envoyé à l'extrémité de réception à la manière de configurer un protocole de gestion de réseau ; et
envoyer le schéma de configuration d'intervalle de temps configuré correspondant à l'au moins un défaut à l'extrémité de réception à la manière de configurer un protocole de gestion de réseau comprend les étapes consistant à :
envoyer, par l'extrémité de transmission, un premier message de gestion de réseau à l'extrémité de réception, dans lequel le premier message de gestion de réseau achemine le schéma de configuration d'intervalle de temps correspondant à l'au moins un défaut configuré par l'extrémité de transmission et son numéro de série.

8. Procédé selon la revendication 7, dans lequel négocier, par l'extrémité de transmission, avec l'extrémité de réception pour commuter vers le schéma de configuration d'intervalle de temps correspondant au défaut comprend les étapes consistant à :
envoyer, par l'extrémité de transmission, un second message de gestion de réseau à l'extrémité de réception, le second message de gestion de réseau acheminant un numéro de série du schéma de configuration d'intervalle de temps correspondant au défaut, et le second message de gestion de réseau étant utilisé pour notifier à l'extrémité de réception de commuter vers le schéma de configuration d'intervalle de temps correspondant au défaut ; et
commuter, par l'extrémité de transmission, vers le schéma de configuration d'intervalle de temps correspondant au défaut, envoyer un message de confirmation d'achèvement de commutation à l'extrémité de réception, et envoyer des données commerciales en fonction du schéma de configuration d'intervalle de temps, après avoir reçu un message de réponse prêt à commuter envoyé par l'extrémité de réception.

9. Procédé selon la revendication 1, dans lequel le schéma de configuration d'intervalle de temps correspondant à l'au moins un défaut configuré par l'extrémité de transmission est envoyé à l'extrémité de réception à la manière d'un canal de gestion dans une trame FlexE ; et
envoyer le schéma de configuration d'intervalle de temps configuré correspondant à l'au moins un défaut à l'extrémité de réception à la manière du canal de gestion dans la trame FlexE comprend les étapes consistant à :
encapsuler, par l'extrémité de transmission, le schéma de configuration d'intervalle de temps configuré correspondant à l'au moins un défaut et son numéro de série dans un paquet Ethernet, acheminer le paquet Ethernet dans le champ de canal de gestion dans la trame FlexE, et envoyer le paquet Ethernet à l'extrémité de réception.

10. Procédé selon la revendication 1, dans lequel négocier avec l'extrémité de réception pour commuter vers le schéma de configuration d'intervalle de temps correspondant au défaut comprend les étapes consistant à :
encapsuler, par l'extrémité de transmission, un numéro de série du schéma de configuration d'intervalle de temps correspondant au défaut dans un paquet Ethernet, et acheminer le paquet Ethernet dans un champ de canal de gestion dans une trame FlexE, et envoyer le paquet Ethernet à l'extrémité de réception ; et
commuter, par l'extrémité de transmission, vers le schéma de configuration d'intervalle de temps correspondant au défaut, envoyer un paquet de confirmation d'achèvement de commutation à l'extrémité de réception, et envoyer des données commerciales en fonction du schéma de configuration d'intervalle de temps, après avoir reçu un paquet de réponse prêt à commuter envoyé par l'extrémité de réception.

11. Procédé pour commuter une configuration d'intervalle de temps dans un protocole Flex Ethernet, FlexE, comprenant les étapes consistant à :
recevoir (1501), par une extrémité de réception, un schéma de configuration d'intervalle de temps correspondant à au moins un défaut envoyé par une extrémité de transmission, avant qu'un défaut ne se produise dans un sous-calendrier d'un groupe FlexE ; et
négocier (1502), par l'extrémité de réception, avec l'extrémité de transmission pour commuter vers un schéma de configuration d'intervalle de temps correspondant au défaut, en réponse au fait que le défaut se produit dans le sous-calendrier du groupe FlexE, dans lequel
le schéma de configuration d'intervalle de temps comprend des schémas de configuration d'intervalle de temps pour des opérations de protection dans tous les scénarios de défaut ou dans de multiples scénarios de défaut, ou des schémas de configuration d'intervalle de temps pour des opérations de protection dans des scénarios de défaut à un seul sous-calendrier, et
chaque défaut correspond à un schéma de configuration d'intervalle de temps correspondant à un numéro de série, et le schéma de configuration d'intervalle de temps est un contenu de configuration d'intervalle de temps à reconfigurer après que le défaut se produit.

12. Procédé selon la revendication 11, dans lequel le schéma de configuration d'intervalle de temps correspondant à l'au moins un défaut est reçu de l'une des manières suivantes :
une manière de configurer un protocole de gestion de réseau, une manière d'un canal de gestion dans une trame FlexE, ou une manière d'un champ fixe dans la trame FlexE.

13. Procédé selon la revendication 11, dans lequel négocier, par l'extrémité de réception, avec l'extrémité de transmission pour commuter vers le schéma de configuration d'intervalle de temps correspondant au défaut comprend les étapes consistant à :
recevoir, par l'extrémité de réception, une trame FlexE envoyée par l'extrémité de transmission, un champ de canal de gestion dans la trame FlexE acheminant un paquet Ethernet, et le paquet Ethernet acheminant un numéro de série du schéma de configuration d'intervalle de temps correspondant au défaut ; et
obtenir, par l'extrémité de réception, le schéma de configuration d'intervalle de temps sauvegardé correspondant au défaut en fonction du numéro de série, achever un travail de préparation de commutation, et envoyer un paquet de réponse prêt à commuter à l'extrémité de transmission ; et recevoir des données commerciales en fonction du schéma de configuration d'intervalle de temps, après avoir reçu un paquet de confirmation d'achèvement de commutation envoyé par l'extrémité de transmission.
